# EUROPEAN PATENT APPLICATION

(11) **EP 4 686 115 A1**
(43) Date of publication of application: **28.01.2026**
(21) Application number: 23928629.7
(22) Date of filing: 22.03.2023
(51) Int. Cl.: H04B 10/27, H04J 14/02

(54) **OPTICAL TRANSMISSION SYSTEM, OPTICAL TRANSMISSION DEVICE, AND OPTICAL TRANSMISSION METHOD**

(71) Applicant: NTT, Inc., Tokyo 100-8116 (JP)
(72) Inventor: KITAMURA Kei, Musashino-shi, Tokyo 180-8585 (JP); NISHIZAWA Hideki, Musashino-shi, Tokyo 180-8585 (JP); SONE Yoshiaki, Musashino-shi, Tokyo 180-8585 (JP); MASUDA Akira, Musashino-shi, Tokyo 180-8585 (JP); TANIGUCHI Hiroki, Musashino-shi, Tokyo 180-8585 (JP); ANAZAWA Kazuya, Musashino-shi, Tokyo 180-8585 (JP); MANO Toru, Musashino-shi, Tokyo 180-8585 (JP)
(74) Representative: Santarelli
(86) International application number: PCT/JP2023/011235
(87) International publication number: WO 2024/195049

(57) **Abstract**

An optical transmission system including: a transmission line design unit configured to specify a first transmission mode to be used for communication of a user-side optical communication device in response to a request of connection request data, acquire information regarding a plurality of wavelengths to be used for communication of the user-side optical communication device in a case where the specified first transmission mode does not satisfy the request of connection request data, and notify the acquired information regarding the plurality of wavelengths; a multiple-lane processing unit configured to generate optical signals of a plurality of wavelengths using an optical signal transmitted from the user-side optical communication device or a transmission signal input to the user-side optical communication device on the basis of the information regarding the plurality of wavelengths notified by the transmission line design unit; and a wavelength demultiplexing unit configured to generate a multiplex signal by multiplexing optical signals of a plurality of wavelengths generated by the multiple-lane processing unit and transmit the generated multiplex signal to a communication partner of the user-side optical communication device.

## Description

### Technical Field

The present invention relates to an optical transmission system, an optical transmission device, and an optical transmission method.

### Background Art

With respect to an increase in communication traffic in data center interconnect (DCI), a method of constructing an End-to-End optical path by a transponder located outside a carrier network has been studied. There is a demand for a technique for automatically setting an optical path in an optimum transmission mode because of an increase in transmission modes of devices that communicate the optical path and a troublesome transmission design. Conventionally, for optimal optical path setting, a method of optimizing the optical path setting of the transponder has been studied. For example, Patent Literature 1 describes a method of setting an optical path in one wavelength.

### Citation List

### Patent Literature

Patent Literature 1: WO 2020/031514 A

### Summary of Invention

### Technical Problem

However, in the optical path design in one wavelength as in Patent Literature 1 described above, when a large-capacity optical path is set at End to End due to a short distance with an increase in bit rate, there is a problem that a transmission mode satisfying a desired transmission distance cannot be set, and a large-capacity optical path to the ground desired by a user cannot be set.

In view of the above circumstances, an object of the present invention is to provide a technique capable of setting a transmission mode satisfying a desired connection request at the time of setting an End-to-End optical path including a transponder located outside a carrier network.

### Solution to Problem

An aspect of the present invention is an optical transmission system including: one or more node devices provided in a carrier network; a control device configured to control the one or more node devices; a user-side optical communication device provided outside the carrier network; a first optical transmission line configured to connect the user-side optical communication device and at least one node device of the one or more node devices; and a second optical transmission line configured to connect node devices, the optical transmission system including: a transmission line design unit configured to specify a first transmission mode to be used for communication of the user-side optical communication device in response to a request of connection request data, acquire information regarding a plurality of wavelengths to be used for communication of the user-side optical communication device in a case where the specified first transmission mode does not satisfy the request of connection request data, and notify the acquired information regarding the plurality of wavelengths; a multiple-lane processing unit configured to generate optical signals of a plurality of wavelengths using an optical signal transmitted from the user-side optical communication device or a transmission signal input to the user-side optical communication device on the basis of the information regarding the plurality of wavelengths notified by the transmission line design unit; and a wavelength demultiplexing unit configured to generate a multiplex signal by multiplexing optical signals of a plurality of wavelengths generated by the multiple-lane processing unit and transmit the generated multiplex signal to a communication partner of the user-side optical communication device.

An aspect of the present invention is an optical transmission device in an optical transmission system including one or more node devices provided in a carrier network, a control device configured to control the one or more node devices, a user-side optical communication device provided outside the carrier network, the first optical transmission line configured to connect the user-side optical communication device and at least one node device of the one or more node devices, and the second optical transmission line configured to connect node devices, the optical transmission device including: a multiple-lane processing unit configured to acquire, in response to a request of connection request data, information regarding a plurality of wavelengths to be used for communication of the user-side optical communication device, the information being calculated in a case where the first transmission mode to be used for communication of the user-side optical communication device does not satisfy the request of connection request data, and generate optical signals of a plurality of wavelengths by using an optical signal transmitted from the user-side optical communication device or a transmission signal input to the user-side optical communication device on the basis of the acquired information regarding the plurality of wavelengths; and a wavelength demultiplexing unit configured to generate a multiplex signal by multiplexing optical signals of a plurality of wavelengths generated by the multiple-lane processing unit and transmit the generated multiplex signal to a communication partner of the user-side optical communication device.

An aspect of the present invention is a control method in an optical transmission system including one or more node devices provided in a carrier network, a control device configured to control the one or more node devices, a user-side optical communication device provided outside the carrier network, the first optical transmission line configured to connect the user-side optical communication device and at least one node device of the one or more node devices, and the second optical transmission line configured to connect node devices, an optical transmission method including: specifying the first transmission mode to be used for communication of the user-side optical communication device in response to a request of connection request data, acquiring information regarding a plurality of wavelengths to be used for communication of the user-side optical communication device in a case where the specified first transmission mode does not satisfy the request of connection request data, notifying the acquired information regarding the plurality of wavelengths, generating optical signals of a plurality of wavelengths by using an optical signal transmitted from the user-side optical communication device or a transmission signal input to the user-side optical communication device on the basis of the notified information regarding the plurality of wavelengths, multiplexing the generated optical signals of the plurality of wavelengths to generate a multiplex signal, and transmitting the generated multiplex signal to a communication partner of the user-side optical communication device.

### Advantageous Effects of Invention

According to the present invention, it is possible to set a transmission mode satisfying a desired connection request at the time of setting an End-to-End optical path including a transponder located outside a carrier network.

### Brief Description of Drawings

[Fig. 1] A block diagram illustrating a configuration of an optical transmission system according to the first embodiment.
[Fig. 2] A diagram illustrating a configuration example of a multiple-lane processing unit according to the first embodiment.
[Fig. 3] A sequence diagram illustrating a flow of processing (part 1) performed by the optical transmission system according to the first embodiment.
[Fig. 4] A sequence diagram illustrating a flow of processing (part 2) performed by the optical transmission system according to the first embodiment.
[Fig. 5] A sequence diagram illustrating a flow of processing (part 2) performed by the optical transmission system according to the first embodiment.
[Fig. 6] A diagram for explaining an outline of processing of a multiple-lane processing unit according to the first embodiment.
[Fig. 7] A block diagram illustrating a configuration of an optical transmission system according to the second embodiment.
[Fig. 8] A diagram illustrating a configuration example of a connection node device according to the second embodiment.
[Fig. 9] A sequence diagram illustrating a flow of processing (part 1) performed by the optical transmission system according to the second embodiment.
[Fig. 10] A sequence diagram illustrating a flow of processing (part 2) performed by the optical transmission system according to the second embodiment.
[Fig. 11] A sequence diagram illustrating a flow of processing (part 2) performed by the optical transmission system according to the second embodiment.
[Fig. 12] A block diagram illustrating a configuration of an optical transmission system according to the fourth embodiment.

### Description of Embodiments

### (First Embodiment)

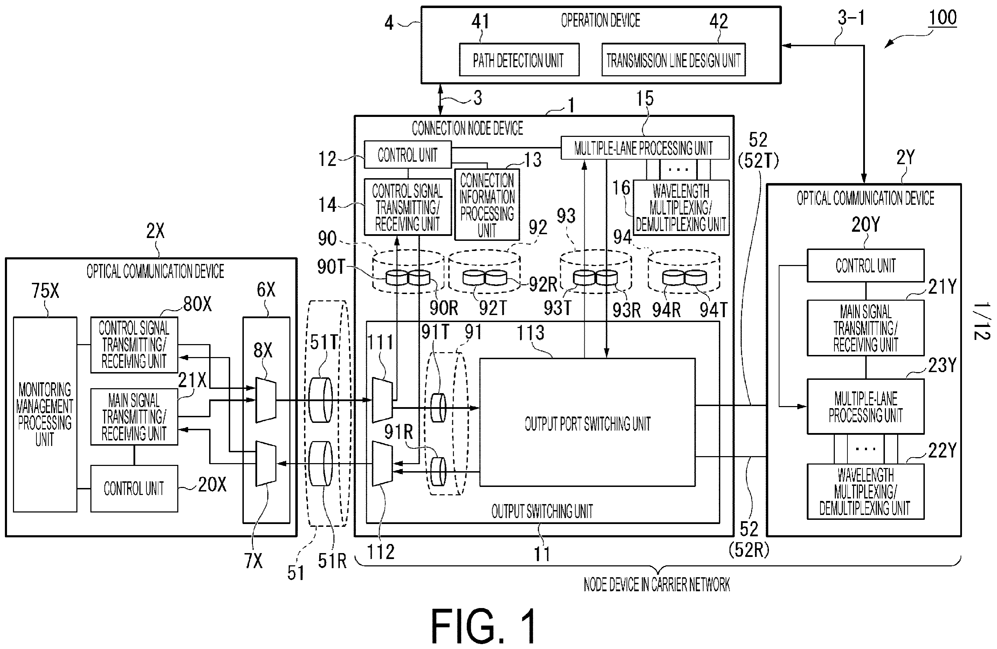

Hereinafter, embodiments of the present invention will be described with reference to the drawings. Fig. 1 is a block diagram illustrating a configuration of an optical transmission system 100 according to the first embodiment. The optical transmission system 100 includes a connection node device 1, an optical communication device 2X, an optical communication device 2Y, and an operation device 4. The number of the connection node device 1, the optical communication device 2X, and the optical communication device 2Y is not particularly limited, but with reference to Fig. 1, a case where the number of the connection node device 1, the optical communication device 2X, and the optical communication device 2Y is one will be described as an example.

The connection node device 1 and the optical communication device 2Y illustrated in Fig. 1 are node devices provided in a carrier network. In the following description, a node device provided in the carrier network means a device that can be controlled by the operation device 4. For example, a device directly connected to the operation device 4 via a connection line may be a node device.

The connection node device 1 and the optical communication device 2X are connected via an optical transmission line 51, and the connection node device 1 and the optical communication device 2Y are connected via an optical transmission line 52. The optical transmission line 51 connects a communication device provided outside the carrier network and a node device provided in the carrier network. For example, the optical transmission line 51 connects the optical communication device 2X and the connection node device 1. The optical transmission line 52 connects the node devices in the carrier network. For example, the optical transmission line 52 connects the connection node device 1 and the optical communication device 2Y.

The operation device 4 is connected to the connection node device 1 via a connection line 3, and is connected to the optical communication device 2Y via a connection line 3-1. When a plurality of optical communication devices 2Y is provided, the operation device 4 is connected to each optical communication device 2Y via a plurality of connection lines 3-1.

The optical communication device 2X is, for example, a communication device used by a user. The optical communication device 2X is an aspect of a user-side optical communication device. The optical communication device 2Y is, for example, an optical transmission device owned by a communication company, that is, a node device in a carrier network, or a white box type transponder owned by a communication company or a data center company. In the first embodiment, assume that the optical communication device 2Y is a node device in a carrier network.

The connection node device 1 is provided between the optical communication device 2X and the optical communication device 2Y. The connection node device 1 forms an optical path so as to enable communication between the optical communication device 2X and the optical communication device 2Y.

The optical transmission line 51 includes, for example, optical fibers 51T and 51R such as a single mode fiber used as a dark fiber. Here, in order to distinguish the two optical fibers included in the optical transmission line 51, alphabetic characters of "T" and "R" are added to a reference sign "51" for convenience of description. The reference sign "T" means a transmission direction as viewed from the optical communication device 2X and a reception direction as viewed from the connection node device 1 and the optical communication device 2Y. The reference sign "R" means a reception direction as viewed from the optical communication device 2X and a transmission direction as viewed from the connection node device 1 and the optical communication device 2Y.

The optical transmission line 52 includes, for example, optical fibers 52T and 52R constituting a carrier network owned by a communication company. The connection lines 3 and 3-1 are communication lines, and may be, for example, wired communication lines such as a dedicated line, or wireless communication lines, or may be a communication network such as a mobile communication network or the Internet network, or a data communication network (DCN). In the case of connection via an optical communication line, a part of the overhead area of the digital frame to be transferred by an optical signal may be allocated as the connection lines 3 and 3-1.

The optical communication device 2X is, for example, a transponder that transmits data provided from an external device to the optical transmission line 51 and outputs data received via the optical transmission line 51 to the external device. The optical communication device 2X includes a control signal multiplexing/separating unit 6X, a control unit 20X, a main signal transmitting/receiving unit 21X, a monitoring management processing unit 75X, and a control signal transmitting/receiving unit 80X.

The control signal multiplexing/separating unit 6X is connected to the control signal transmitting/receiving unit 80X, the main signal transmitting/receiving unit 21X, and the optical transmission line 51 via an optical fiber inside the optical communication device 2X. The control signal multiplexing/separating unit 6X includes a wavelength multiplexing unit 8X and a wavelength separating unit 7X. The wavelength multiplexing unit 8X performs wavelength multiplexing on the optical signal of the control signal output from the control signal transmitting/receiving unit 80X and the optical signal of the main signal output from the main signal transmitting/receiving unit 21X. The wavelength multiplexing unit 8X transmits the wavelength-multiplexed optical signal to the optical fiber 51T of the optical transmission line 51.

The wavelength separating unit 7X separates, according to wavelengths, the wavelength-multiplexed optical signal transmitted through an optical fiber 51R of the optical transmission line 51. As a result, the wavelength separating unit 7X separates, for example, the wavelength-multiplexed optical signal into the optical signal of the control signal and the optical signal of the main signal. The wavelength separating unit 7X outputs the separated optical signal of the control signal to the control signal transmitting/receiving unit 80X, and outputs the separated optical signal of the main signal to the main signal transmitting/receiving unit 21X.

The wavelength separating unit 7X and the wavelength multiplexing unit 8X include, for example, a coupler of 3dB or the like, a wavelength filter, an optical splitter, an arrayed-waveguide grating (AWG), a C-band and C-band coupler, and a C-band and O-band coupler.

The control unit 20X is connected to the main signal transmitting/receiving unit 21X, and controls the main signal transmitting/receiving unit 21X or inputs/outputs information from/to the main signal transmitting/receiving unit 21X. For example, when starting connection to a main signal transmitting/receiving unit 21Y included in the optical communication device 2Y, the control unit 20X generates a connection request instruction signal.

Upon receiving the connection request instruction signal from the control unit 20X, the main signal transmitting/receiving unit 21X generates data indicating a connection request (hereinafter referred to as "connection request data"). Here, the connection request data is data including a destination address, a source address, a desired bit rate, and specification information such as a specification of the main signal transmitting/receiving unit 21X. The specification information of the main signal transmitting/receiving unit 21X is, for example, information including a modulation scheme available in the main signal transmitting/receiving unit 21X, an available forward error correction (FEC) type, a baud rate, a type of a light source, and the like.

Here, the information indicating the type of the light source is, for example, information indicating whether the light source is of a type that outputs a single predetermined wavelength or a type that the light source outputs after changing the wavelength, and in addition to the information, information including information of a wavelength or a wavelength band that can be output by the light source. The information indicating the type of the light source varies depending on the light source included in the main signal transmitting/receiving unit 21X.

Address information capable of identifying each of the main signal transmitting/receiving unit 21X included in the optical communication device 2X and the main signal transmitting/receiving unit 21Y included in the optical communication device 2Y is given to these main signal transmitting/receiving units 21X and 21Y in advance. The control unit 20X stores the desired bit rate and the address information of the connection destination in an internal storage area in advance. The main signal transmitting/receiving unit 21X stores address information given to the main signal transmitting/receiving unit 21X in the internal storage area in advance.

Note that, instead of storing the address information of the connection destination in advance in the internal storage area, the control unit 20X, for example, may capture and acquire the address information of the connection destination designated by a user of the optical communication device 2X or may acquire the address information of the connection destination from the connection node device 1. Instead of storing the desired bit rate in advance in the internal storage area, the control unit 20X may receive an input operation of the user and capture and acquire data of a bit rate designated in advance by the user as the desired bit rate.

For example, when requesting connection to the main signal transmitting/receiving unit 21Y included in the optical communication device 2Y, the control unit 20X generates a connection request instruction signal including the address information of the main signal transmitting/receiving unit 21Y and the desired bit rate, and outputs the connection request instruction signal to the main signal transmitting/receiving unit 21X. The main signal transmitting/receiving unit 21X reads the address information of the main signal transmitting/receiving unit 21Y included in the connection request instruction signal received from the control unit 20X and determines the address information as the connection destination address information, and reads the address information of the main signal transmitting/receiving unit 21X stored in the internal storage area and determines the address information as the connection source address information. The main signal transmitting/receiving unit 21X generates the connection request data including the connection destination address information and the connection source address information determined as described above, the desired bit rate included in the connection request instruction signal, and the specification information of the main signal transmitting/receiving unit 21X stored in the internal storage area.

The main signal transmitting/receiving unit 21X transmits the connection request data to the connection node device 1 in a basic mode. Here, the basic mode is a transmission mode determined in advance by a combination of predetermined basic output optical power, basic modulation scheme, basic wavelength, and the like. The main signal transmitting/receiving unit 21X stores information regarding the basic mode in an internal storage area in advance. Therefore, upon receiving the connection request instruction signal from the control unit 20X, the main signal transmitting/receiving unit 21X transmits the connection request data to the connection node device 1 in the basic mode.

Furthermore, the main signal transmitting/receiving unit 21X captures transmission data provided from an external device connected to the optical communication device 2X. The transmission data is, for example, a client signal or the like. The main signal transmitting/receiving unit 21X generates a transmission data signal in a transmission frame format including the captured transmission data in a payload. At this time, the main signal transmitting/receiving unit 21X generates the transmission data signal such that the connection request data is included in the free space of the overhead of the transmission frame. Note that, the main signal transmitting/receiving unit 21X may generate the transmission data signal so as not to include the transmission data in the payload in order not to transmit the transmission data at the timing before the transmission mode information is determined.

The main signal transmitting/receiving unit 21X captures the received data signal of the electrical signal. The main signal transmitting/receiving unit 21X reads data included in the payload and overhead of the received data signal that has been captured. The main signal transmitting/receiving unit 21X outputs a client signal in the read data to an external device.

The monitoring management processing unit 75X captures an electric control signal output from the control signal transmitting/receiving unit 80X. The monitoring management processing unit 75X performs processing related to monitoring and management according to the type of the captured control signal and data included in the control signal. When transmitting a control signal to the operation device 4 in processing regarding monitoring and management, the monitoring management processing unit 75X generates an electric control signal and outputs the electric control signal to the control signal transmitting/receiving unit 80X.

The control signal transmitting/receiving unit 80X converts the electric control signal generated by the monitoring management processing unit 75X into an optical control signal and outputs the optical control signal to the control signal multiplexing/separating unit 6X. The control signal transmitting/receiving unit 80X converts the optical control signal output from the control signal multiplexing/separating unit 6X into an electric control signal and outputs the electric control signal to the monitoring management processing unit 75X.

The optical communication device 2Y includes a control unit 20Y, the main signal transmitting/receiving unit 21Y, a wavelength multiplexing/demultiplexing unit 22Y, and a multiple-lane processing unit 23Y. The control unit 20Y is connected to the main signal transmitting/receiving unit 21Y and the multiple-lane processing unit 23Y, and controls the main signal transmitting/receiving unit 21Y or inputs/outputs information from/to the main signal transmitting/receiving unit 21Y. The control unit 20Y receives the transmission mode information transmitted from the operation device 4. Note that, the transmission mode information transmitted from the operation device 4 includes information for specifying a transmission mode and connection source address information. The information for specifying the transmission mode is configuration information. Here, the configuration information for specifying the transmission mode is, for example, information including a modulation scheme, a baud rate, a bit rate, a forward error correction (FEC) type, output optical power, a signal band permitted to be used, and the like.

The transmission mode information transmitted from the operation device 4 includes information on a wavelength set as necessary. The control unit 20Y performs setting corresponding to the information for specifying the transmission mode included in the received transmission mode information on the main signal transmitting/receiving unit 21Y. For example, the control unit 20Y performs setting of the modulation scheme, the baud rate, the bit rate, the FEC type, the signal band permitted to be used, and the like indicated in the information for specifying the transmission mode on the main signal transmitting/receiving unit 21Y according to the setting parameters.

Furthermore, the control unit 20Y outputs the information on the wavelength set included in the transmission mode information to the multiple-lane processing unit 23Y. The information on the wavelength set includes, for example, a combination of a wavelength number and the number of wavelengths. In the optical communication device 2Y, the information on the wavelength set is used to specify the main signal transmitted from the optical communication device 2X. In a case where the desired bit rate requested by the optical communication device 2X is a large capacity (for example, 800G, 400G, or the like), in some cases, transmission cannot be performed at one wavelength depending on the transmission distance between the optical communication device 2X and the optical communication device 2Y.

Therefore, in the present embodiment, the connection node device 1 divides the main signal transmitted from the optical communication device 2X into a plurality of signals, and generates a plurality of optical signals having different wavelengths by mapping each of the divided signals to light. As described above, in the connection node device 1, since the main signal transmitted from the optical communication device 2X is divided into a plurality of signals, the optical communication device 2Y needs to specify which wavelength of the optical signal is the main signal transmitted from the optical communication device 2X. The control unit 20Y outputs the received information on the wavelength set to the multiple-lane processing unit 23Y, so that the multiple-lane processing unit 23Y can specify the main signal transmitted from the optical communication device 2X to restore one main signal.

The main signal transmitting/receiving unit 21Y transmits and receives a main signal with setting parameter set in the control unit 20Y. The main signal transmitting/receiving unit 21Y generates an optical signal of the main signal with the setting parameter set in the control unit 20Y, and transmits the generated optical signal to the optical transmission line 52. The main signal transmitting/receiving unit 21Y captures the received data signal of the electrical signal. The main signal transmitting/receiving unit 21Y reads data included in the payload and overhead of the received data signal that has been captured. The main signal transmitting/receiving unit 21Y outputs a client signal in the read data to an external device.

Note that, the optical communication device 2Y may include the same function unit as the optical communication device 2X. That is, the optical communication device 2Y may further include a control signal multiplexing/separating unit 6Y, a monitoring management processing unit 75Y, and a control signal transmitting/receiving unit 80Y. The control signal multiplexing/separating unit 6Y, the monitoring management processing unit 75Y, and the control signal transmitting/receiving unit 80Y perform processing similar to those of the control signal multiplexing/separating unit 6X, the monitoring management processing unit 75X, and the control signal transmitting/receiving unit 80X included in the optical communication device 2X.

The connection node device 1 includes an output switching unit 11, a control unit 12, a connection information processing unit 13, a control signal transmitting/receiving unit 14, a multiple-lane processing unit 15, a wavelength multiplexing/demultiplexing unit 16, a control signal internal optical line 90, a connection processing internal optical line 92, a main signal internal optical line 93, and a multiplexing/demultiplexing internal optical line 94. The control signal internal optical line 90 is an optical line including an optical fiber 90T and an optical fiber 90R. The connection processing internal optical line 92 is an optical line including an optical fiber 92T and an optical fiber 92R. The main signal internal optical line 93 is an optical line including an optical fiber 93T and an optical fiber 93R. The multiplexing/demultiplexing internal optical line 94 is an optical line including an optical fiber 94T and an optical fiber 94R.

The output switching unit 11 has a function of multiplexing or demultiplexing an input optical signal, a main signal internal optical line 91, and a function of switching an output path of an optical signal. As a function of multiplexing or demultiplexing an optical signal, the output switching unit 11 includes a wavelength separating unit 111 and a wavelength multiplexing unit 112. The wavelength separating unit 111 and the wavelength multiplexing unit 112 include, for example, a coupler of 3dB or the like, a wavelength filter, an optical splitter, an AWG, a C-band and C-band coupler, and a C-band and O-band coupler.

The main signal internal optical line 91 is an optical line including an optical fiber 91T and an optical fiber 91R. As a function of switching the output path of the optical signal, the output switching unit 11 includes an output port switching unit 113. The output port switching unit 113 is, for example, an optical cross-connect. Note that, the output port switching unit 113 may have another configuration regardless of the optical cross-connect as long as the output path of the optical signal can be switched.

The wavelength separating unit 111 separates the wavelength-multiplexed optical signal transmitted through the optical fiber 51T of the optical transmission line 51 according to wavelengths. As a result, the wavelength separating unit 111 separates, for example, the wavelength-multiplexed optical signal into the optical signal of the control signal and the optical signal of the main signal. The wavelength separating unit 111 outputs the separated optical signal of the control signal to the control signal transmitting/receiving unit 14 via the optical fiber 90T of the control signal internal optical line 90. Furthermore, the wavelength separating unit 111 outputs the separated optical signal of the main signal to the output port switching unit 113 via the optical fiber 91T of the main signal internal optical line 91.

The wavelength multiplexing unit 112 performs wavelength multiplexing on the optical signal of the control signal output from the control signal transmitting/receiving unit 14 and the optical signal of the main signal input via the optical fiber 91R of the main signal internal optical line 91 or the optical signal input via the optical fiber 92R of the connection processing internal optical line 92. The wavelength multiplexing unit 112 transmits the wavelength-multiplexed optical signal to the optical fiber 51R of the optical transmission line 51.

The output port switching unit 113 switches the output port of the optical signal according to the control of the control unit 12. For example, the output port switching unit 113 performs switching processing of switching the connection destination of the optical fiber 51T to any one of the optical fiber 92T, the optical fiber 93T, and the optical fiber 52T. The output port switching unit 113 performs switching processing of switching the connection destination of the optical fiber 51R to any one of the optical fiber 92R, the optical fiber 93R, and the optical fiber 52R.

Furthermore, the output port switching unit 113 performs switching processing of switching the connection destination of the optical fiber 52T to any one of the optical fiber 91T and the optical fiber 94T. The output port switching unit 113 performs switching processing of switching the connection destination of the optical fiber 52R to any one of the optical fiber 91R and the optical fiber 94R.

In a state before an optical path for performing communication between the optical communication device 2X and the optical communication device 2Y is formed (hereinafter referred to as an "initial state"), the output port switching unit 113 switches the output port so as to connect the optical fiber 91T and the optical fiber 92T and connect the optical fiber 91R and the optical fiber 92R according to the control of the control unit 12. By performing such switching, the connection request data transmitted from the optical communication device 2X operating in the basic mode is transferred to the operation device 4.

On the other hand, in a state after the optical path for performing communication between the optical communication device 2X and the optical communication device 2Y is formed, the output port switching unit 113 performs one of the following first switching processing and second switching processing according to the control of the control unit 12. The first switching processing is processing in which the output port switching unit 113 switches the output port so as to connect the optical fiber 91T and the optical fiber 52T and connect the optical fiber 91R and the optical fiber 52R. The second switching processing is processing in which the output port switching unit 113 switches the output port so as to connect the optical fiber 91T and the optical fiber 93T, connect the optical fiber 91R and the optical fiber 93R, connect the optical fiber 94T and the optical fiber 52T, and connect the optical fiber 94R and the optical fiber 52R.

When the first switching processing is performed by the output port switching unit 113, the optical signal of the main signal transmitted from the optical communication device 2X is transferred to the optical communication device 2Y as it is. When the second switching processing is performed by the output port switching unit 113, the optical signal of the main signal transmitted from the optical communication device 2X is transferred to the multiple-lane processing unit 15. By performing such switching, the optical signal of the main signal transmitted from the optical communication device 2X is transferred to the optical communication device 2Y as it is or via the multiple-lane processing unit 15 and the wavelength multiplexing/demultiplexing unit 16.

The control unit 12 stores an address path correspondence table in an internal storage area in advance. The address path correspondence table is a table in which identification information for specifying the optical transmission lines 51 and 52 connected to the main signal transmitting/receiving units 21X and 21Y corresponding to the respective pieces of address information is associated with the respective pieces of address information of the main signal transmitting/receiving units 21X and 21Y included in the optical communication devices 2X and 2Y connected to the connection node device 1. Note that, the control unit 12 may acquire the address path correspondence table from an external device on demand instead of storing the address path correspondence table in advance in the internal storage area.

The connection information processing unit 13 converts the optical signal output from the output port switching unit 113 into an electrical signal. In a case where the converted electrical signal includes the connection request data transmitted by the optical communication device 2X, the connection information processing unit 13 reads and acquires the connection request data from the electrical signal. Furthermore, on the basis of the converted electrical signal, the connection information processing unit 13 calculates and acquires transmission line information of the optical fiber 51T of the optical transmission line 51 by, for example, predetermined calculation disclosed in Reference Literature 1 below.

[Reference Literature 1: Takeo Sasai, et al, "Simultaneous Detection of Anomaly Points and Fiber Types in Multi-Span Transmission Links Only by Receiver-Side Digital Signal Processing", OFC 2020: 1-3]

Here, the transmission line information of the optical fiber 51T is information including a loss of the optical fiber 51T included in the optical transmission line 51, a gain of an amplifier inserted in the optical transmission line 51, a noise figure (NF) of the amplifier, a fiber type of the optical fiber 51T, and the like. Furthermore, on the basis of the converted electrical signal, the connection information processing unit 13 acquires a bit error rate (BER) of the optical transmission line 51 and generates connection information including the acquired BER of the optical transmission line 51 and the calculated transmission line information of the optical fiber 51T.

Note that, the connection information processing unit 13 may acquire a quality factor (Q factor), polarization mode dispersion (PMD), chromatic dispersion (CD), or an optical signal-to-noise ratio (OSNR) in addition to the BER, and include any one of these pieces of information in the connection information. The connection information processing unit 13 outputs the connection request data and the connection information to the control unit 12.

The control unit 12 transmits the connection information and the connection request data output from the connection information processing unit 13 to the operation device 4 via the connection line 3. The control unit 12 outputs the information specifying the transmission mode included in the transmission mode information received from the operation device 4 to the connection information processing unit 13, and outputs the information on the wavelength set included in the transmission mode information to the multiple-lane processing unit 15. The control unit 12 outputs a control signal (hereinafter referred to as a "switching instruction signal") instructing the output port switching unit 113 to perform switching processing of switching the connection destination.

The multiple-lane processing unit 15 performs division processing on the optical signal input via the main signal internal optical line 93 according to the information on wavelength set output from the control unit 12. Specifically, first, the multiple-lane processing unit 15 converts the input optical signal into an electrical signal. Next, the multiple-lane processing unit 15 divides the electric signal into the number of wavelengths indicated by the information on wavelength set. For example, in a case where the number of wavelengths indicated by the information on wavelength set is four, the multiple-lane processing unit 15 divides the electric signal into four so that the bit rates are uniform. Thereafter, the multiple-lane processing unit 15 converts each of the divided electric signals into optical signals having different wavelengths. As a result, a plurality of optical signals having different wavelengths is generated on the basis of one optical signal.

The wavelength multiplexing/demultiplexing unit 16 multiplexes or demultiplexes the input optical signal. For example, the wavelength multiplexing/demultiplexing unit 16 generates a multiplex signal by multiplexing the plurality of optical signals having different wavelengths generated by the multiple-lane processing unit 15. The wavelength multiplexing/demultiplexing unit 16 outputs the generated multiplex signal to the output port switching unit 113 via the optical fiber 94T. The wavelength multiplexing/demultiplexing unit 16 demultiplexes the optical signal input via the optical fiber 94R according to wavelengths. The wavelength multiplexing/demultiplexing unit 16 outputs the demultiplexed optical signals having different wavelengths to the multiple-lane processing unit 15.

The operation device 4 includes a path detection unit 41 and a transmission line design unit 42. The path detection unit 41 previously stores, in an internal storage area, a path information table in which address information of the main signal transmitting/receiving units 21X and 21Y of the optical communication devices 2X and 2Y is associated with identification information for specifying an optical transmission line corresponding to the address information. The path detection unit 41 may acquire the path information table from an external device on demand instead of storing the path information table in advance in an internal storage area.

For example, in the case of the optical transmission system 100, in the path information table, identification information for specifying the optical transmission lines 51 and 52 connected to the main signal transmitting/receiving units 21X and 21Y corresponding to the address information is associated with the address information of the main signal transmitting/receiving units 21X and 21Y included in the optical communication devices 2X and 2Y, respectively. The path detection unit 41 refers to the path information table and detects identification information for specifying the optical transmission line 52 corresponding to the connection destination address information included in the connection request data transmitted by the control unit 12 of the connection node device 1.

The transmission line design unit 42 stores transmission line information of the optical transmission line 52 in association with identification information for specifying the optical transmission line 52 in an internal storage area. Note that, the transmission line design unit 42 may calculate the transmission line information of the optical transmission line 52 in advance by predetermined calculation on the basis of the optical signal transmitted through the optical transmission line 52 constituting the carrier network and store the transmission line information in an internal storage area, or may acquire the transmission line information from an external device on demand at a specific timing such as when the network is installed. The transmission line information of the optical transmission line 52 may be obtained in advance by a method other than the predetermined calculation. Note that, the transmission line information of the optical transmission line 52 calculated by the transmission line design unit 42 is information of a transmission line between the connection node device 1 and the optical communication device 2Y.

The transmission line design unit 42 stores information indicating free resource of the optical transmission line 52 in an internal storage area. Here, the information indicating the free resource is, for example, information indicating any of a wavelength, a wavelength band, and an optical transmission line that are not used for communication when determining the free state of the resource. Note that, assume that the information indicating the free resource is updated by the transmission line design unit 42 every time a communication line is established.

On the basis of the connection information (for example, the BER of the optical transmission line 51 and the calculated transmission line information of the optical fiber 51T are included) transmitted by the control unit 12 of the connection node device 1 and the transmission line information of the optical transmission line 52 corresponding to the identification information for specifying the optical transmission line 52 detected by the path detection unit 41, the transmission line design unit 42 calculates a quality of transmission (QoT) by, for example, a transmission design tool provided inside. Here, as the transmission design tool, for example, a gaussian noise model in python (GNPy) or the like described in Reference Literature 2 below is applied.

[Reference Literature 2: Alessio Ferrari, et al, "The GNPy Open Source Library of Applications for Software Abstraction of WDM Data Transport in Open Optical Networks", 2020 6th IEEE International Conference on Network Softwarization(NetSoft), DOI:10.1109/NetSoft48620.2020.9165313, June 2020]

Here, the quality of transmission is a value calculated by a transmission design tool, such as an OSNR, a generalized signal-to-noise ratio (GSNR), a Q value, a Q value degradation amount, a BER, and a BER degradation amount. Here, the information such as the OSNR, GSNR, Q value, Q value degradation amount, BER, and BER degradation amount calculated by the transmission design tool is information such as the OSNR, GSNR, Q value, and BER of the entire optical transmission line including the optical transmission line 51 and the optical transmission line 52.

The transmission line design unit 42 selects configuration information by predetermined selection processing on the basis of the calculated quality of transmission and connection request data. Here, the predetermined selection processing is performed as follows. For example, the transmission line design unit 42 first selects a transmission mode specified by configuration information that satisfies the transmission capacity requested in the connection request data from the viewpoint of the transmission capacity. Note that, the FEC type information available in the main signal transmitting/receiving unit 21Y is acquired in advance by the transmission line design unit 42 and stored in an internal storage area, or acquired on demand from the main signal transmitting/receiving unit 21Y or an external device.

Next, the transmission line design unit 42 determines whether or not the transmission mode specified by the configuration information satisfying the transmission capacity satisfies the transmission distance to the ground. The transmission distance to the ground is a distance from the position of the optical communication device 2X to the destination ground (for example, the optical communication device 2Y). If it is determined that the transmission mode specified by the configuration information satisfying the transmission capacity satisfies the transmission distance to the ground, the transmission line design unit 42 determines the transmission mode used for communication of the optical communication devices 2X and 2Y to be the transmission mode specified by the configuration information satisfying the transmission capacity.

For example, the transmission line design unit 42 selects the FEC type available in the main signal transmitting/receiving unit 21X and the main signal transmitting/receiving unit 21Y on the basis of the FEC type included in the specification information of the main signal transmitting/receiving unit 21X. After selecting the FEC type, the transmission line design unit 42 compares the ONSR threshold determined for each modulation scheme included in the specification information of the main signal transmitting/receiving unit 21X with the OSNR of the calculated quality of transmission, and selects a modulation scheme in which the OSNR threshold is equal to or greater than the OSNR of the calculated quality of transmission. The transmission line design unit 42 selects configuration information by processing of selecting a combination of a modulation scheme and a baud rate that enable transmission at a bit rate equal to or higher than the bit rate indicated by the desired bit rate information from among a plurality of bit rate candidates in each of the selected several modulation schemes. As described above, the transmission mode is specified by the configuration information selected by the transmission line design unit 42.

In the above-described predetermined selection processing, a combination of a modulation scheme and a baud rate that enable transmission at a bit rate equal to or higher than the bit rate indicated by the desired bit rate information and closest to the bit rate indicated by the desired bit rate information may be selected from among a plurality of bit rate candidates in each of the selected several modulation schemes.

On the other hand, if it is determined that the transmission mode specified by the configuration information satisfying the transmission capacity does not satisfy the transmission distance to the ground, the transmission line design unit 42 specifies the transmission mode satisfying a desired connection request (transmission capacity or transmission distance) by using a plurality of wavelengths.

The transmission mode is specified by the configuration information selected by the transmission line design unit 42. The transmission line design unit 42 generates transmission mode information including the selected configuration information and connection source address information included in the connection request data. Note that, the transmission mode information also includes the information on wavelength set as necessary. The transmission line design unit 42 transmits the generated transmission mode information and the identification information for specifying the optical transmission line 52 detected by the path detection unit 41 to the control unit 12 of the connection node device 1 via the connection line 3.

The transmission line design unit 42 previously stores, in an internal storage area, a connection line table in which address information of the main signal transmitting/receiving unit 21Y included in the optical communication device 2Y is associated with the connection line 3-1 to which the optical communication device 2Y corresponding to the address information is connected. The transmission line design unit 42 refers to the connection line table stored in the internal storage area, and transmits the generated transmission mode information to the optical communication device 2Y via the connection line 3-1 connected to the optical communication device 2Y including the main signal transmitting/receiving unit 21Y corresponding to the connection destination address information included in the connection request data.

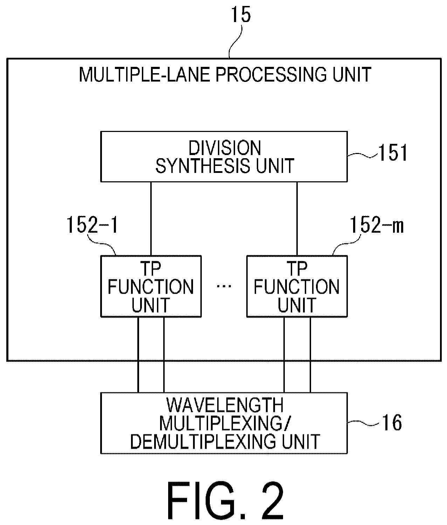

Fig. 2 is a diagram illustrating a configuration example of the multiple-lane processing unit 15 according to the first embodiment. In Fig. 2, the multiple-lane processing unit 15 is illustrated as an example, but the multiple-lane processing unit 23Y included in the optical communication device 2Y also has a similar configuration. The multiple-lane processing unit 15 includes a division synthesis unit 151 and a plurality of TP function units 152-1 to 152-m (m is an integer of 2 or more).

The division synthesis unit 151 has a function of converting an optical signal into an electric signal and a function of dividing or synthesizing the electric signal. The function of converting an optical signal into an electrical signal is so-called photoelectric conversion. The division synthesis unit 151 performs multiple-lane on an electrical signal. Here, multiple-lane means dividing one electric signal by a plurality of electric signals. As a method of multiple-lane, a method using an optical transport unit (OTUN) frame may be used, a multi-fiber, a multi-core, or a multi-mode may be used, and a method without an inter-channel guard band or a method with an inter-channel guard band may be used as a method of multicarrier transmission. In the following description, a configuration in which multiple-lane is performed on an electrical signal by a method using an OTU frame in the division synthesis unit 151 will be described as an example.

The division synthesis unit 151 divides the electrical signal into a number corresponding to the number of wavelengths instructed from the control unit 12. For example, in a case where the number of wavelengths instructed from the control unit 12 is "4", the division synthesis unit 151 divides the electric signal into four. The division synthesis unit 151 converts each of the plurality of optical signals output from any one of the plurality of TP function units 152-1 to 152-m into electrical signals and then synthesizes the electrical signals.

The TP function units 152-1 to 152-m generates a plurality of optical signals having wavelengths instructed from the control unit 12 on the basis of the plurality of electrical signals output from the division synthesis unit 151. For example, in a case where the wavelengths instructed from the control unit 12 are four wavelengths λ1 to λ4, the TP function units 152-1 to 152-4 generate optical signals having the respective wavelengths λ1 to λ4 on the basis of the respective four divided electrical signals output from the division synthesis unit 151.

Note that, each of the TP function units 152-1 to 152-m may be provided with a light source that outputs light of a single different wavelength. In this case, each of the TP function units 152-1 to 152-m generates optical signals having different wavelengths. Note that, each of the TP function units 152-1 to 152-m may be provided with a variable light source capable of outputting light of a plurality of wavelengths.

### (Processing by Optical Transmission System of First Embodiment)

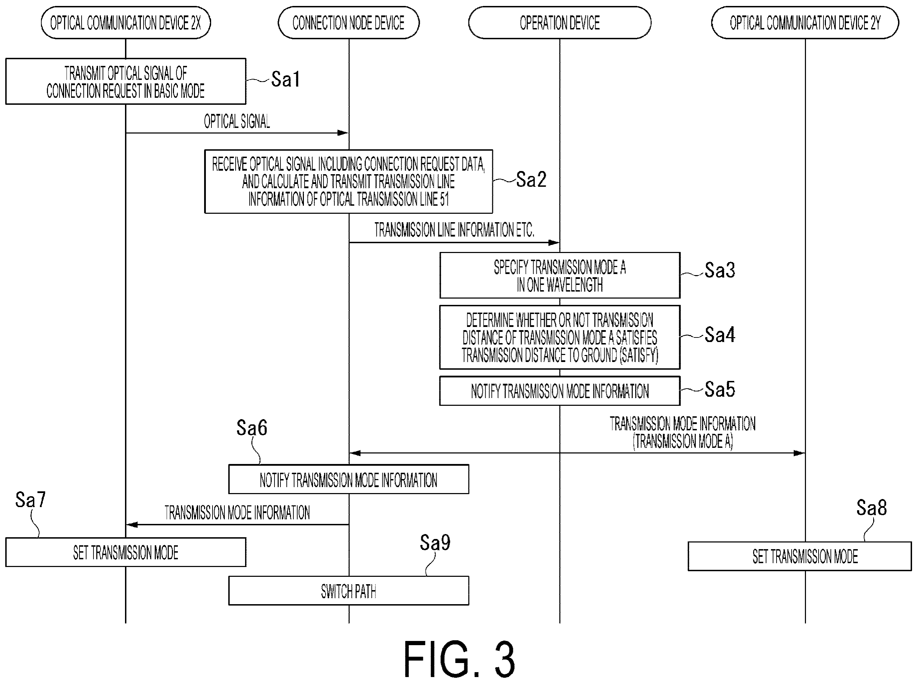

Fig. 3 is a sequence diagram illustrating a flow of processing (part 1) performed by the optical transmission system 100 according to the first embodiment. Note that, in Fig. 3, processing in a case where the specified transmission mode satisfies a request will be described. At the start of the processing in Fig. 3, the output port switching unit 113 of the connection node device 1 sets the connection destination of the optical transmission line 51 to the connection information processing unit 13 included in the connection node device 1 in the initial state.

The control unit 20X of the optical communication device 2X generates a connection request instruction signal including the address information of the main signal transmitting/receiving unit 21Y and the desired bit rate in order to establish connection to the main signal transmitting/receiving unit 21Y included in the optical communication device 2Y. The control unit 20X outputs the generated connection request instruction signal to the main signal transmitting/receiving unit 21X. The main signal transmitting/receiving unit 21X captures the connection request instruction signal output from the control unit 20X. The main signal transmitting/receiving unit 21X sets the address information of the main signal transmitting/receiving unit 21Y included in the captured connection request instruction signal as connection destination address information.

The main signal transmitting/receiving unit 21X sets the address information of the main signal transmitting/receiving unit 21X stored in the internal storage area as connection source address information. The main signal transmitting/receiving unit 21X generates connection request data including the connection destination address information and the connection source address information, the desired bit rate included in the connection request instruction signal, and the specification information of the main signal transmitting/receiving unit 21X stored in the internal storage area.

The main signal transmitting/receiving unit 21X generates an optical signal of a connection request in the basic mode using the generated connection request data. Specifically, the main signal transmitting/receiving unit 21X generates a transmission data signal such that the connection request data is included in the free space of the overhead of a transmission frame, and generates an optical signal by optically modulating the continuous light on the basis of the generated transmission data signal. The main signal transmitting/receiving unit 21X transmits the generated optical signal to the optical fiber 51T (step Sa1). The optical signal transmitted from the main signal transmitting/receiving unit 21X propagates through the optical fiber 51T and is input to the wavelength separating unit 111 of the connection node device 1.

The wavelength separating unit 111 demultiplexes the input optical signal according to wavelengths. Here, assume that the wavelength of the optical signal of the connection request is a wavelength output to the optical fiber 91T in the wavelength separating unit 111. In this case, the optical signal demultiplexed by the wavelength separating unit 111 is input to the output port switching unit 113 via the optical fiber 91T. In the output port switching unit 113, a path is set so as to connect the optical fiber 91T and the optical fiber 92T in the initial state. Therefore, the optical signal input to the output port switching unit 113 is input to the connection information processing unit 13 via the optical fiber 92T.

The connection information processing unit 13 calculates transmission line information of the optical transmission line 51 on the basis of the input optical signal. Specifically, the connection information processing unit 13 converts the received optical signal into an electrical signal to obtain a received data signal. Next, the connection information processing unit 13 reads the connection request data included in the overhead area of the received data signal. Furthermore, the connection information processing unit 13 acquires the BER of the optical transmission line 51 from the received data signal. The connection information processing unit 13 calculates transmission line information of the optical transmission line 51 on the basis of the received data signal.

The connection information processing unit 13 generates connection information including the calculated transmission line information of the optical transmission line 51 and the BER of the optical transmission line 51. The connection information processing unit 13 outputs the connection request data and the generated connection information to the control unit 12. The control unit 12 captures the connection request data and connection information output from the connection information processing unit 13. The control unit 12 transmits the captured connection request data and connection information to the operation device 4 via the connection line 3 (step Sa2).

The operation device 4 receives the connection request data and the connection information transmitted from the control unit 12 of the connection node device 1. The path detection unit 41 refers to a path information table stored in an internal storage area or a path information table acquired on demand, and detects identification information for specifying the optical transmission line 52 corresponding to the connection destination address information included in the received connection request data. Here, the path detection unit 41 detects the identification information for specifying the optical transmission line 52 corresponding to the address information of the main signal transmitting/receiving unit 21Y. The path detection unit 41 outputs the detected identification information for specifying the optical transmission line 52 to the transmission line design unit 42.

The transmission line design unit 42 of the operation device 4 selects, for the received connection request data, configuration information in one wavelength that satisfies a condition from the viewpoint of a transmission capacity. The transmission mode is specified by the configuration information selected by the transmission line design unit 42. Here, the transmission line design unit 42 specifies a transmission mode A based on the selected configuration information (step Sa3).

The transmission line design unit 42 determines whether or not the specified transmission distance of the transmission mode A satisfies the transmission distance to the ground on the basis of the transmission line information of the optical transmission line 51 and the transmission line information of the optical transmission line 52 (step Sa4). Here, assume that the transmission line design unit 42 determines that the specified transmission distance of the transmission mode A satisfies the transmission distance to the ground. In this case, the transmission line design unit 42 generates transmission mode information including the selected configuration information and connection source address information included in the connection request data. Thereafter, the transmission line design unit 42 notifies the connection node device 1 and the optical communication device 2Y of the generated transmission mode information (step Sa5). For example, the transmission line design unit 42 notifies the connection node device 1 of the generated transmission mode information via the connection line 3, and notifies the optical communication device 2Y of the generated transmission mode information via the connection line 3-1. Note that, the transmission line design unit 42 includes the address information of the main signal transmitting/receiving unit 21Y included in the optical communication device 2Y as the connection source address information in the transmission mode information addressed to the optical communication device 2Y.

The control unit 12 of the connection node device 1 receives the transmission mode information transmitted by the transmission line design unit 42 of the operation device 4. The control unit 12 outputs the received transmission mode information to the connection information processing unit 13. The connection information processing unit 13 generates an optical signal including the transmission mode information output from the control unit 12. Specifically, first, the connection information processing unit 13 generates the transmission data signal such that the transmission mode information is included in the free space of the overhead of the transmission frame. Next, on the basis of the generated transmission data signal, the connection information processing unit 13 optically modulates the continuous light output by the light source included in the connection information processing unit 13 with the basic output optical power according to the basic modulation scheme of the basic mode. As a result, the connection information processing unit 13 generates an optical signal including the transmission mode information. At this time, the connection information processing unit 13 generates an optical signal including the transmission mode information in the basic mode.

The connection information processing unit 13 outputs the generated optical signal to the output switching unit 11 via the optical fiber 92R. The output switching unit 11 transmits the optical signal output from the connection information processing unit 13 to the optical fiber 51R via the optical fiber 91R and the wavelength multiplexing unit 112 (step Sa6). In this manner, the connection node device 1 notifies the optical communication device 2X of the transmission mode information. The optical signal transmitted from the output switching unit 11 propagates through the optical fiber 51R and is input to the optical communication device 2X.

The optical communication device 2X receives the optical signal propagated through the optical fiber 51R. The main signal transmitting/receiving unit 21X of the optical communication device 2X converts the received optical signal into an electrical signal to obtain a received data signal. The main signal transmitting/receiving unit 21X reads the transmission mode information from the overhead area of the received data signal. In a case where the connection source address information included in the read transmission mode information is not the address information given to the main signal transmitting/receiving unit 21X stored in the internal storage area, the main signal transmitting/receiving unit 21X discards the captured transmission mode information. On the other hand, in a case where the address information included in the captured transmission mode information matches the address information given to the main signal transmitting/receiving unit 21X, the main signal transmitting/receiving unit 21X sets the transmission mode indicated in the read transmission mode information (step Sa7).

The control unit 20Y of the optical communication device 2Y receives the transmission mode information transmitted via the connection line 3-1. In a case where the connection source address information included in the received transmission mode information is not the address information given to the main signal transmitting/receiving unit 21Y stored in the internal storage area, the control unit 20Y discards the transmission mode information. On the other hand, in a case where the address information included in the captured transmission mode information matches the address information given to the main signal transmitting/receiving unit 21Y, the control unit 20Y outputs the transmission mode information to the main signal transmitting/receiving unit 21Y. The main signal transmitting/receiving unit 21Y sets the transmission mode indicated in the transmission mode information (step Sa8).

After the notification of the transmission mode information, the control unit 12 of the connection node device 1 refers to the path information table and detects identification information for specifying the optical transmission line 51 corresponding to the connection source address information included in the transmission mode information. Here, the control unit 12 detects identification information for specifying the optical transmission line 51 corresponding to the address information of the main signal transmitting/receiving unit 21X. The control unit 12 performs switching processing of connecting the optical transmission line 51 and the optical transmission line 52 on the basis of the detected identification information for specifying the optical transmission line 51 and the identification information for specifying the optical transmission line 52. That is, after the notification of the transmission mode information, the control unit 12 outputs, to the output port switching unit 113, a switching instruction signal for causing the output port switching unit 113 to perform the first switching processing. Upon receiving the switching instruction signal from the control unit 12, the output port switching unit 113 performs the first switching processing (step Sa9).

As a result, the optical fiber 51T and the optical fiber 52T are connected via the output switching unit 11, and the optical fiber 51R and the optical fiber 52R are connected via the output switching unit 11. As a result, the main signal transmitting/receiving unit 21X of the optical communication device 2X and the main signal transmitting/receiving unit 21Y of the optical communication device 2Y are connected via the optical transmission line 51 and the optical transmission line 52.

### (Processing by Optical Transmission System of First Embodiment)

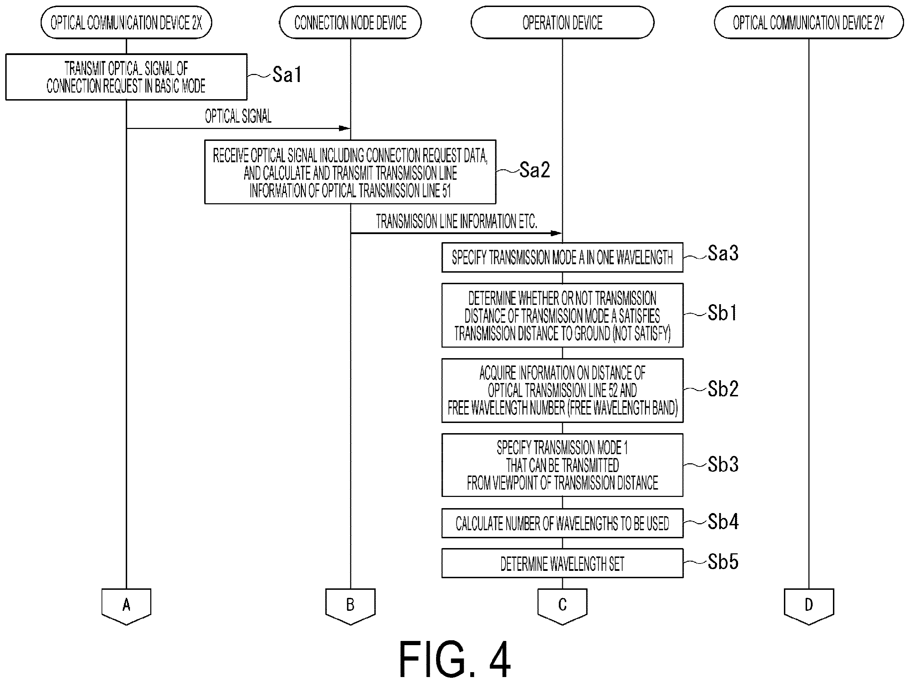

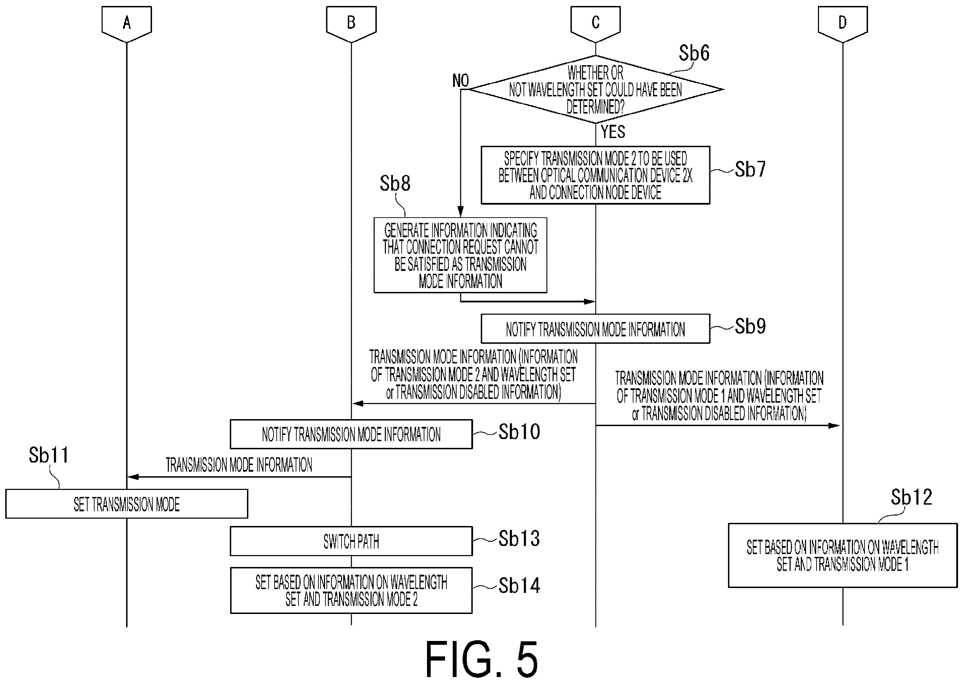

Figs. 4 and 5 are sequence diagrams illustrating a flow of processing (part 2) performed by the optical transmission system 100 according to the first embodiment. In Figs. 4 and 5, processing in a case where the transmission distance of the specified transmission mode does not satisfy the transmission distance to the ground will be described. In Figs. 4 and 5, the processing similar to those in Fig. 3 is denoted by the reference signs similar to those used in Fig. 3, and explanation thereof is omitted.

After the processing of step Sa3, the transmission line design unit 42 determines whether or not the specified transmission distance of the transmission mode A satisfies the transmission distance to the ground on the basis of the transmission line information of the optical transmission line 51 and the transmission line information of the optical transmission line 52 (step Sb1). Here, assume that the transmission line design unit 42 determines that the specified transmission distance of the transmission mode A does not satisfy the transmission distance to the ground. In this case, the transmission line design unit 42 acquires information on the distance of the optical transmission line 52 and the free wavelength number (free wavelength band) (step Sb2).

The transmission line design unit 42 may acquire the information of the free wavelength number (free wavelength band) from the information indicating the free resource of the optical transmission line 52 stored in the internal storage area. Assume that the information on the distance of the optical transmission line 52 is acquired in advance by the transmission line design unit 42 and stored in an internal storage area, or acquired from an external device on demand.

On the basis of the distance of the optical transmission line 52, the transmission line information of the optical transmission line 51, and the transmission line information of the optical transmission line 52, the transmission line design unit 42 specifies the transmission mode that can be transmitted from the viewpoint of the transmission distance (step Sb3). Here, the transmission mode that can be transmitted from the viewpoint of the transmission distance is a transmission mode that satisfies the transmission distance from the optical communication device 2X to the ground. In a case where there is a plurality of transmission modes that can be transmitted from the viewpoint of the transmission distance, the transmission line design unit 42 may make an inquiry to the resource management system of the network. In the processing of step Sb3, assume that the transmission line design unit 42 specifies a transmission mode 1.

The transmission line design unit 42 calculates the number of wavelengths to be used on the basis of the specified bit rate of the transmission mode 1 and the desired bit rate included in the connection request data (step Sb4). Specifically, the transmission line design unit 42 calculates the number of wavelengths so that the bit rate of the transmission mode 1 can satisfy the desired bit rate. For example, in a case where the desired bit rate is 800Gbps (bit per second) and the bit rate of the transmission mode 1 is 200Gbps, a bit rate of 4 times is required in the transmission mode 1 in order to satisfy the desired bit rate. Therefore, the transmission line design unit 42 calculates the number of wavelengths to be used as "4".

Thereafter, the transmission line design unit 42 determines the wavelength set to be used with reference to the information indicating the free resource (step Sb5). When determining the wavelength set, the transmission line design unit 42 may select a combination that minimizes the frequency band to be used, or may select a combination that has a large margin, that is, a combination that has the OSNR larger than the OSNR that can be transmitted. Note that, in a case where the number of wavelengths to be used exceeds the number of free wavelengths, the transmission line design unit 42 determines that communication is impossible.

The transmission line design unit 42 determines whether or not the wavelength set could have been determined (step Sb6). If it is determined that the wavelength set could have been determined (step Sb6-YES), the transmission line design unit 42 specifies the transmission mode to be used between the optical communication device 2X and the connection node device 1 (step Sb7). In the processing of step Sb7, assume that the transmission line design unit 42 specifies a transmission mode 2.

On the other hand, if it is determined that the wavelength set could not have been determined (step Sb6-NO), the transmission line design unit 42 generates transmission mode information including information indicating that the connection request cannot be satisfied (hereinafter referred to as "transmission disabled information") and connection source address information included in the connection request data (step Sb8). Thereafter, the transmission line design unit 42 notifies the connection node device 1 and the optical communication device 2Y of the generated transmission mode information (step Sb9). For example, the transmission line design unit 42 notifies the connection node device 1 of the generated transmission mode information via the connection line 3, and notifies the optical communication device 2Y of the generated transmission mode information via the connection line 3-1. If the wavelength set could not have been determined, the transmission line design unit 42 may not notify the optical communication device 2Y of the transmission mode information.

If the wavelength set could have been determined, the transmission line design unit 42 generates transmission mode information addressed to the optical communication device 2X and transmission mode information addressed to the optical communication device 2Y. Specifically, the transmission line design unit 42 generates, as the transmission mode information addressed to the optical communication device 2X, transmission mode information including information (for example, information specifying the transmission mode 2) for specifying the transmission mode used by the optical communication device 2X, information on the wavelength set, and connection source address information included in the connection request data. Furthermore, the transmission line design unit 42 generates, as the transmission mode information addressed to the optical communication device 2Y, transmission mode information including information (for example, information specifying the transmission mode 1) for specifying the transmission mode used by the optical communication device 2Y and information on the wavelength set.

The control unit 12 of the connection node device 1 receives the transmission mode information transmitted by the transmission line design unit 42 of the operation device 4. In a case where the received transmission mode information includes the information on the wavelength set, the control unit 12 outputs the information on the wavelength set and the information for specifying the transmission mode (for example, information for specifying the transmission mode 2) to the multiple-lane processing unit 15. Then, the control unit 12 outputs the transmission mode information excluding the information on the wavelength set to the connection information processing unit 13. The connection information processing unit 13 generates an optical signal including the transmission mode information output from the control unit 12.

Specifically, first, the connection information processing unit 13 generates the transmission data signal such that the transmission mode information is included in the free space of the overhead of the transmission frame. Next, on the basis of the generated transmission data signal, the connection information processing unit 13 optically modulates the continuous light output by the light source included in the connection information processing unit 13 with the basic output optical power according to the basic modulation scheme of the basic mode. As a result, the connection information processing unit 13 generates an optical signal including the transmission mode information. At this time, the connection information processing unit 13 generates an optical signal including the transmission mode information in the basic mode.

The connection information processing unit 13 outputs the generated optical signal to the output switching unit **11** via the optical fiber 92R. The output switching unit **11** transmits the optical signal output from the connection information processing unit 13 to the optical fiber 51R via the optical fiber 91R and the wavelength multiplexing unit 112 (step Sb10). In this manner, the connection node device 1 notifies the optical communication device 2X of the transmission mode information. The optical signal transmitted from the output switching unit **11** propagates through the optical fiber 51R and is input to the optical communication device 2X.

The optical communication device 2X receives the optical signal propagated through the optical fiber 51R. The main signal transmitting/receiving unit 21X of the optical communication device 2X converts the received optical signal into an electrical signal to obtain a received data signal. The main signal transmitting/receiving unit 21X reads the transmission mode information from the overhead area of the received data signal. In a case where the connection source address information included in the read transmission mode information is not the address information given to the main signal transmitting/receiving unit 21X stored in the internal storage area, the main signal transmitting/receiving unit 21X discards the captured transmission mode information. On the other hand, in a case where the address information included in the captured transmission mode information matches the address information given to the main signal transmitting/receiving unit 21X, the main signal transmitting/receiving unit 21X sets the transmission mode (for example, transmission mode 2) indicated in the read transmission mode information (step Sb11).

The control unit 20Y of the optical communication device 2Y receives the transmission mode information transmitted via the connection line 3-1. The control unit 20Y outputs the received transmission mode information to the main signal transmitting/receiving unit 21Y. The main signal transmitting/receiving unit 21Y sets the transmission mode (for example, transmission mode 1) indicated in the transmission mode information (step Sb12).

Furthermore, the control unit 20Y outputs the information on the wavelength set included in the transmission mode information to the multiple-lane processing unit 23Y. As a result, the multiple-lane processing unit 23Y can specify which wavelength combination the optical signal of the main signal transmitted from the optical communication device 2X is.

After the notification of the transmission mode information, the control unit 12 of the connection node device 1 outputs, to the output port switching unit 113, a switching instruction signal for causing the output port switching unit 113 to perform the second switching processing. Upon receiving the switching instruction signal from the control unit 12, the output port switching unit 113 performs the second switching processing (step Sb13). As a result, the optical fiber 91T and the optical fiber 93T are connected via the output switching unit 11, the optical fiber 91R and the optical fiber 93R are connected via the output switching unit **11,** the optical fiber 94T and the optical fiber 52T are connected via the output switching unit 11, and the optical fiber 94R and the optical fiber 52R are connected via the output switching unit 11. As a result, the main signal transmitting/receiving unit 21X of the optical communication device 2X and the main signal transmitting/receiving unit 21Y of the optical communication device 2Y are connected via the multiple-lane processing unit 15 and the wavelength multiplexing/demultiplexing unit 16.

The multiple-lane processing unit 15 performs setting based on the information for specifying the transmission mode included in the transmission mode information and the information on the wavelength set (step Sb14). Specifically, the division synthesis unit 151 of the multiple-lane processing unit 15 determines the number of divisions on the basis of the information on the wavelength set. For example, the division synthesis unit 151 determines the number of wavelengths as the number of divisions. Furthermore, the TP function units 152-1 to 152-m specifies the wavelength to be used on the basis of the information on the wavelength set, and specifies the modulation scheme or the like on the basis of the information for specifying the transmission mode.

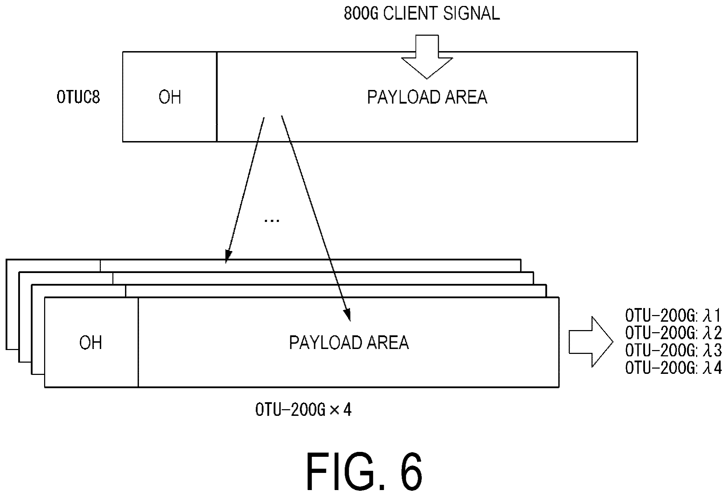

Here, the processing of the multiple-lane processing unit 15 will be described with reference to Fig. 6. Fig. 6 is a diagram for explaining an outline of processing of the multiple-lane processing unit 15 according to the first embodiment. Fig. 6 illustrates a case where the optical communication device 2X desires to transmit a client signal of 800G, and it is assumed that it is instructed from the operation device 4 to use four wavelengths λ1 to λ4 as information on wavelength set. The division synthesis unit 151 of the multiple-lane processing unit 15 converts the optical signal of the main signal transmitted from the optical communication device 2X into an electrical signal. The division synthesis unit 151 divides the electrical signal into four electrical signals. At this time, the division synthesis unit 151 divides the electrical signal into four electrical signals so that the bit rates are uniform. After storing each of the four divided electrical signals output from the division synthesis unit 151 in the payload area of the OTU frame, the TP function units 152-1 to 152-4 generate optical signals of different wavelengths λ1 to λ4, respectively.

The optical transmission system 100 configured as described above includes: the transmission line design unit 42 that specifies a transmission mode to be used for communication of the optical communication device 2X in response to a request of connection request data, acquires information on a wavelength set to be used for communication of the optical communication device 2X in a case where the specified transmission mode does not satisfy the request of connection request data, and notifies the connection node device 1 and the optical communication device 2Y of the acquired information on the wavelength set; the multiple-lane processing unit 15 that generates optical signals of a plurality of wavelengths using an optical signal transmitted from the optical communication device 2X on the basis of the information on the wavelength set notified by the transmission line design unit 42; and the wavelength multiplexing/demultiplexing unit 16 that generates a multiplex signal by multiplexing optical signals of a plurality of wavelengths generated by the multiple-lane processing unit 15 and transmits the generated multiplex signal to the optical communication device 2Y. As described above, in the optical transmission system 100, in a case where the user's request is not satisfied in one wavelength, the transmission mode is determined to satisfy the user's request using a plurality of wavelengths. Therefore, it is possible to set a transmission mode satisfying a desired connection request at the time of setting an End-to-End optical path including a transponder located outside a carrier network.

### (Second Embodiment)

In the second embodiment, in a mode in which optical communication devices located outside a carrier network are connected by an optical path, a configuration will be described in which a plurality of wavelengths is used in a case where a request for connection request data (for example, the transmission distance) cannot be satisfied.

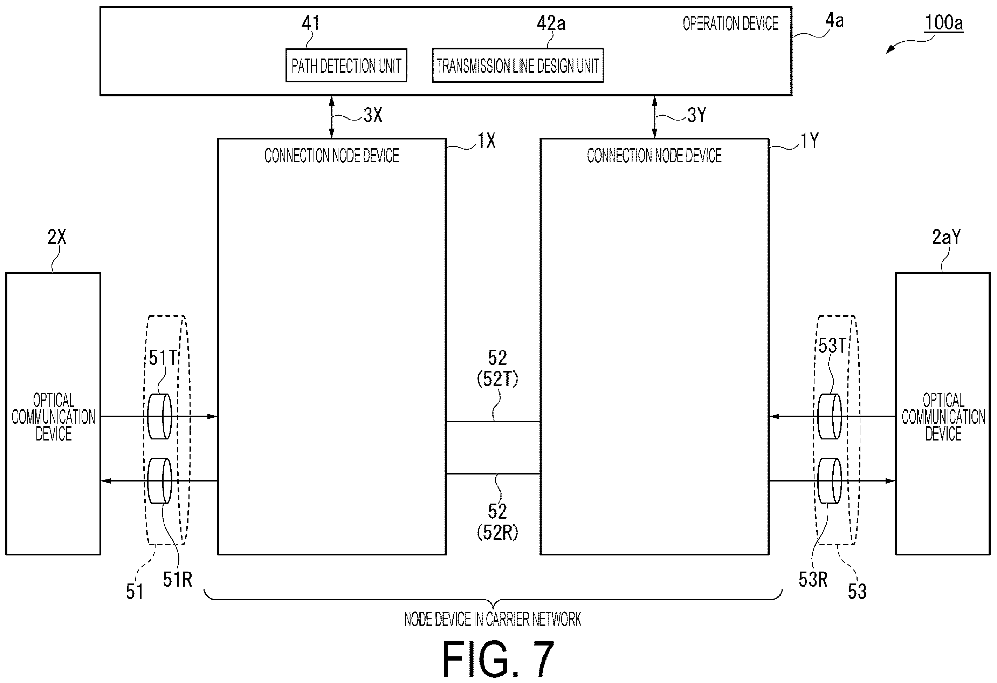

Fig. 7 is a block diagram illustrating a configuration of an optical transmission system 100a according to the second embodiment. The optical transmission system 100a includes a connection node device 1X, a connection node device 1Y, the optical communication device 2X, an optical communication device 2aY, and an operation device 4a. The number of the connection node device 1X, the connection node device 1Y, the optical communication device 2X, and the optical communication device 2aY is not particularly limited, but in Fig. 7, a case where the number of the connection node device 1X, the connection node device 1Y, the optical communication device 2X, and the optical communication device 2aY is one will be described as an example.

The connection node device 1X and the connection node device 1Y illustrated in Fig. 7 are node devices provided in a carrier network. The optical communication devices 2X and 2aY are, for example, communication devices used by users.

The connection node device 1X and the optical communication device 2X are connected via the optical transmission line 51, the connection node device 1X and the connection node device 1Y are connected via the optical transmission line 52, and the connection node device 1Y and the optical communication device 2aY are connected via an optical transmission line 53. The optical transmission line 53 connects the optical communication device 2aY and the connection node device 1Y. In the second embodiment, the optical transmission line 52 connects the connection node device 1X and the connection node device 1Y. The optical transmission line 53 includes, for example, optical fibers 53T and 53R such as dark fibers.

The operation device 4a is connected to the connection node device 1X via a connection line 3X and is connected to the connection node device 1Y via a connection line 3Y.

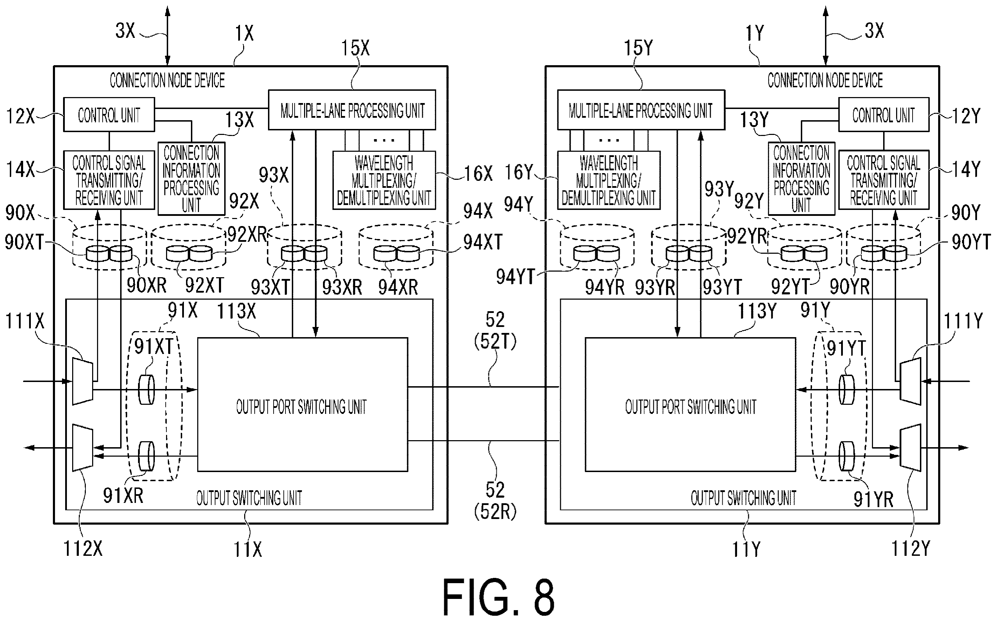

As illustrated in Fig. 8, the connection node devices 1X and 1Y include function units similar to those of the connection node device 1 illustrated in Fig. 1. Fig. 8 is a diagram illustrating a configuration example of the connection node devices 1X and 1Y according to the second embodiment. Note that, the function units included in the connection node devices 1X and 1Y have been described with reference to Fig. 1 and thus will not be described. Hereinafter, when function units included in each of the connection node devices 1X and 1Y are indicated, the function units will be described by adding "X" and" Y" to reference signs of the function units of the connection node device 1 illustrated in Fig. 1, respectively, for distinction.

Note that, in the second embodiment, the reference sign "T" in the connection node device 1X, the optical transmission line 51, and the optical transmission line 52 means a transmission direction as viewed from the optical communication device 2X and a reception direction as viewed from the connection node device 1Y, a relay node device 10, and the optical communication device 2aY. Furthermore, the reference sign "R" in the connection node device 1X, the optical transmission line 51, and the optical transmission line 52 means a reception direction as viewed from the optical communication device 2X and a transmission direction as viewed from the connection node device 1Y, the relay node device 10, and the optical communication device 2aY. In the third embodiment, the reference sign "T" in the connection node device 1Y and the optical transmission line 53 means a transmission direction as viewed from the optical communication device 2aY and a reception direction as viewed from the connection node device 1X, the relay node device 10, and the optical communication device 2X. Furthermore, the reference sign "R" in the connection node device 1Y and the optical transmission line 53 means a reception direction as viewed from the optical communication device 2aY and a transmission direction as viewed from the connection node device 1X, the relay node device 10, and the optical communication device 2X.

The optical communication device 2aY includes function units similar to those of the optical communication device 2X. Hereinafter, in the case of indicating function units included in the optical communication device 2aY, reference sign "X" of the function units included in the optical communication device 2X is replaced with "Y".

The operation device 4a includes the path detection unit 41 and a transmission line design unit 42a. The transmission line design unit 42a stores transmission line information of the optical transmission line 52 in association with identification information for specifying the optical transmission line 52 in an internal storage area. Note that, the transmission line information of the optical transmission line 52 calculated by the transmission line design unit 42a is information of a transmission line between the connection node device 1X and the connection node device 1Y.

The transmission line design unit 42a stores information indicating free resource of the optical transmission line 52 in an internal storage area. Note that, the information indicating the free resource is updated by the transmission line design unit 42a every time a communication line is established. The transmission line design unit 42a stores in advance, in an internal storage area, the connection line table in which identification information for specifying the connection node device 1X is associated with the connection line 3X, and information for specifying the connection node device 1Y is associated with the connection line 3Y.

The transmission line design unit 42a calculates a quality of transmission of an optical transmission line from the optical transmission line 51 to the optical transmission line 53 via the optical transmission line 52 in order to connect the main signal transmitting/receiving unit 21X and the main signal transmitting/receiving unit 21Y. The transmission line design unit 42a specifies a transmission mode used for communication of the optical communication devices 2X and 2aY on the basis of the calculated quality of transmission.

The transmission line design unit 42a calculates the quality of transmission by, for example, a transmission design tool provided inside on the basis of the connection information (for example, the BER of the optical transmission line 51 and the calculated transmission line information of the optical fiber 51T are included) transmitted by the control unit 12X of the connection node device 1X, the connection information (for example, the BER of the optical transmission line 53 and the calculated transmission line information of the optical fiber 53T are included) transmitted by a control unit 12Y of the connection node device 1Y, and the transmission line information of the optical transmission line 52 corresponding to the identification information for specifying the optical transmission line 52 detected by the path detection unit 41.

The transmission line design unit 42a selects configuration information by predetermined selection processing on the basis of the calculated quality of transmission and connection request data. Here, the predetermined selection processing according to the second embodiment is performed as follows. For example, the transmission line design unit 42a first selects a transmission mode specified by configuration information that satisfies the transmission capacity requested by each connection request data from the viewpoint of the transmission capacity. In this manner, the transmission line design unit 42a selects the transmission mode specified by the configuration information that satisfies the transmission capacity requested by the connection request data transmitted from the optical communication device 2X and the transmission capacity requested by the connection request data transmitted from the optical communication device 2aY.

Next, the transmission line design unit 42a determines whether or not the transmission mode specified by the configuration information satisfying the transmission capacity satisfies the transmission distance to the ground. If it is determined that the transmission mode specified by the configuration information satisfying the transmission capacity satisfies the transmission distance to the ground, the transmission line design unit 42a determines the transmission mode used for communication of the optical communication devices 2X and 2aY to be the transmission mode specified by the configuration information satisfying the transmission capacity.

On the other hand, if it is determined that the transmission mode specified by the configuration information satisfying the transmission capacity does not satisfy the transmission distance to the ground, the transmission line design unit 42a specifies the transmission mode satisfying a desired connection request (transmission capacity or transmission distance) by using a plurality of wavelengths.

The transmission mode is specified by the configuration information selected by the transmission line design unit 42a. The transmission line design unit 42a generates transmission mode information addressed to the optical communication device 2X including the selected configuration information and connection source address information (address information of the optical communication device 2X) included in the connection request data transmitted from the optical communication device 2X. Note that, the transmission mode information also includes the information on wavelength set as necessary. The transmission line design unit 42a transmits the generated transmission mode information addressed to the optical communication device 2X and the identification information for specifying the optical transmission line 52 detected by the path detection unit 41 to the control unit 12X of the connection node device 1X via the connection line 3X.

Furthermore, the transmission line design unit 42a generates transmission mode information addressed to the optical communication device 2aY including the selected configuration information and connection source address information (address information of the optical communication device 2aY) included in the connection request data transmitted from the optical communication device 2aY. Note that, the transmission mode information also includes the information on wavelength set as necessary. The transmission line design unit 42a transmits the generated transmission mode information addressed to the optical communication device 2aY and the identification information for specifying the optical transmission line 53 detected by the path detection unit 41 to the control unit 12Y of the connection node device 1Y via the connection line 3Y.

### (Processing by Optical Transmission System of Second Embodiment)

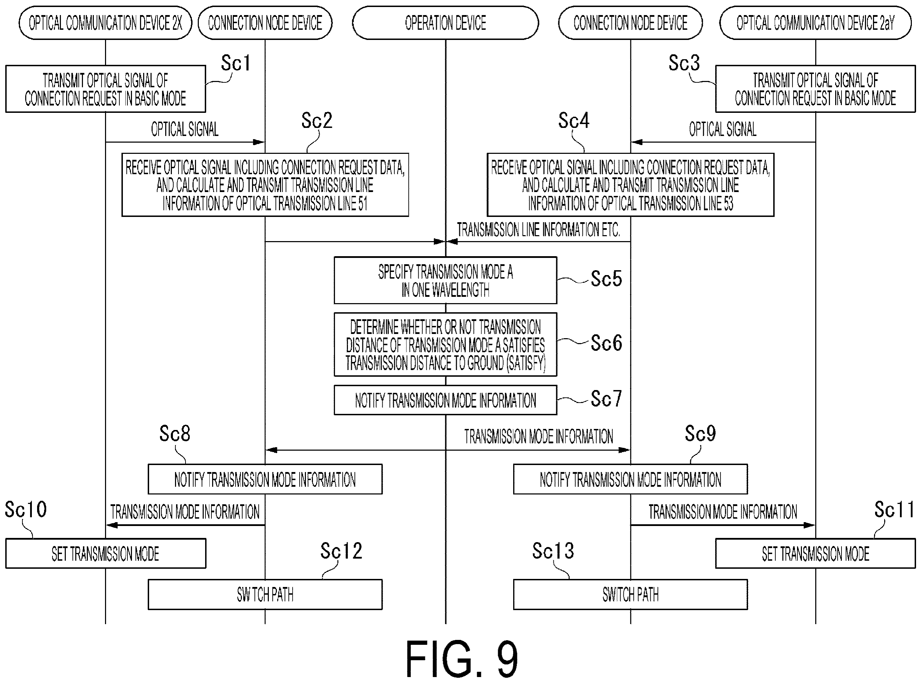

Fig. 9 is a sequence diagram illustrating a flow of processing (part 1) performed by the optical transmission system 100a according to the second embodiment. Note that, in Fig. 9, processing in a case where the specified transmission mode satisfies a request will be described. Note that, at the start of the processing of Fig. 9, the output port switching unit 113X of the connection node device 1X sets the connection destination of the optical transmission line 51 to a connection information processing unit 13X included in the connection node device 1X in the initial state, and an output port switching unit 113Y of the connection node device 1Y sets the connection destination of the optical transmission line 53 to the connection information processing unit 13Y included in the connection node device 1Y in the initial state.

The control unit 20X of the optical communication device 2X generates a connection request instruction signal including the address information of the main signal transmitting/receiving unit 21Y and the desired bit rate in order to establish connection to the main signal transmitting/receiving unit 21Y included in the optical communication device 2aY. The control unit 20X outputs the generated connection request instruction signal to the main signal transmitting/receiving unit 21X. The main signal transmitting/receiving unit 21X captures the connection request instruction signal output from the control unit 20X. The main signal transmitting/receiving unit 21X sets the address information of the main signal transmitting/receiving unit 21Y included in the captured connection request instruction signal as connection destination address information.

The main signal transmitting/receiving unit 21X sets the address information of the main signal transmitting/receiving unit 21X stored in the internal storage area as connection source address information. The main signal transmitting/receiving unit 21X generates connection request data including the connection destination address information and the connection source address information, the desired bit rate included in the connection request instruction signal, and the specification information of the main signal transmitting/receiving unit 21X stored in the internal storage area.

The main signal transmitting/receiving unit 21X generates an optical signal of a connection request in the basic mode using the generated connection request data. The main signal transmitting/receiving unit 21X transmits the generated optical signal to the optical fiber 51T (step Sc1). The optical signal transmitted from the main signal transmitting/receiving unit 21X propagates through the optical fiber 51T and is input to a wavelength separating unit 111X of the connection node device 1X.

The wavelength separating unit 111X demultiplexes the input optical signal according to wavelengths. Here, assume that the wavelength of the optical signal of the connection request transmitted from the optical communication device 2X is the wavelength output to an optical fiber 91XT in the wavelength separating unit 111X. In this case, the optical signal demultiplexed by the wavelength separating unit 111X is input to the output port switching unit 113X via the optical fiber 91XT. In the output port switching unit 113X, a path is set so as to connect the optical fiber 91XT and an optical fiber 92XT in the initial state. Therefore, the optical signal input to the output port switching unit 113X is input to the connection information processing unit 13X via the optical fiber 92XT.

The connection information processing unit 13X calculates transmission line information of the optical transmission line 51 on the basis of the input optical signal. The connection information processing unit 13X generates connection information including the calculated transmission line information of the optical transmission line 51 and the BER of the optical transmission line 51. The connection information processing unit 13X outputs the connection request data and the generated connection information to the control unit 12X. The control unit 12X captures the connection request data and the connection information output from the connection information processing unit 13X. The control unit 12X transmits the captured connection request data and the connection information to the operation device 4a via the connection line 3X (step Sc2).

The operation device 4a receives the connection request data and the connection information transmitted from the control unit 12X of the connection node device 1X. The path detection unit 41 refers to a path information table stored in an internal storage area or a path information table acquired on demand, and detects identification information for specifying the optical transmission line 52 corresponding to the connection destination address information included in the received connection request data. Here, the path detection unit 41 detects the identification information for specifying the optical transmission line 52 corresponding to the address information of the main signal transmitting/receiving unit 21Y. The path detection unit 41 outputs the detected identification information for specifying the optical transmission line 52 to the transmission line design unit 42a.

The control unit 20Y of the optical communication device 2aY generates a connection request instruction signal including the address information of the main signal transmitting/receiving unit 21X and the desired bit rate in order to establish connection to the main signal transmitting/receiving unit 21X included in the optical communication device 2X. The control unit 20Y outputs the generated connection request instruction signal to the main signal transmitting/receiving unit 21Y. The main signal transmitting/receiving unit 21Y captures the connection request instruction signal output from the control unit 20Y. The main signal transmitting/receiving unit 21Y sets the address information of the main signal transmitting/receiving unit 21X included in the captured connection request instruction signal as connection destination address information.

The main signal transmitting/receiving unit 21Y sets the address information of the main signal transmitting/receiving unit 21Y stored in the internal storage area as connection source address information. The main signal transmitting/receiving unit 21Y generates connection request data including the connection destination address information and the connection source address information, the desired bit rate included in the connection request instruction signal, and the specification information of the main signal transmitting/receiving unit 21Y stored in the internal storage area.

The main signal transmitting/receiving unit 21Y generates an optical signal of a connection request in the basic mode using the generated connection request data. The main signal transmitting/receiving unit 21Y transmits the generated optical signal to the optical fiber 53T (step Sc3). The optical signal transmitted from the main signal transmitting/receiving unit 21Y propagates through the optical fiber 53T and is input to a wavelength separating unit 111Y of the connection node device 1Y.

The wavelength separating unit 111Y demultiplexes the input optical signal according to wavelengths. Here, assume that the wavelength of the optical signal of the connection request transmitted from the optical communication device 2aY is the wavelength output to an optical fiber 91YT in the wavelength separating unit 111Y. In this case, the optical signal demultiplexed by the wavelength separating unit 111Y is input to the output port switching unit 113Y via the optical fiber 91YT. In the output port switching unit 113Y, a path is set so as to connect the optical fiber 91YT and an optical fiber 92YT in the initial state. Therefore, the optical signal input to the output port switching unit 113Y is input to the connection information processing unit 13Y via the optical fiber 92YT.

The connection information processing unit 13Y calculates transmission line information of the optical transmission line 53 on the basis of the input optical signal. The connection information processing unit 13Y generates connection information including the calculated transmission line information of the optical transmission line 53 and the BER of the optical transmission line 53. The connection information processing unit 13Y outputs the connection request data and the generated connection information to the control unit 12Y. The control unit 12Y captures the connection request data and the connection information output from the connection information processing unit 13Y. The control unit 12Y transmits the captured connection request data and connection information to the operation device 4a via the connection line 3Y (step Sc4).

The operation device 4a receives the connection request data and the connection information transmitted from the control unit 12X of the connection node device 1X and the connection request data and the connection information transmitted from the control unit 12Y of the connection node device 1Y. The path detection unit 41 refers to a path information table stored in an internal storage area or a path information table acquired on demand, and detects identification information for specifying the optical transmission line 52 corresponding to the connection destination address information included in the received connection request data. Here, the path detection unit 41 detects the identification information for specifying the optical transmission line 52 corresponding to the address information of the main signal transmitting/receiving unit 21Y. The path detection unit 41 outputs the detected identification information for specifying the optical transmission line 52 to the transmission line design unit 42.

The transmission line design unit 42a of the operation device 4 selects, for the received connection request data, configuration information in one wavelength that satisfies a condition from the viewpoint of a transmission capacity. The transmission mode is specified by the configuration information selected by the transmission line design unit 42a. Here, the transmission line design unit 42a specifies the transmission mode A based on the selected configuration information (step Sc5).

The transmission line design unit 42a determines whether or not the specified transmission distance of the transmission mode A satisfies the transmission distance to the ground on the basis of the transmission line information of the optical transmission line 51, the transmission line information of the optical transmission line 52, and the transmission line information of the optical transmission line 53 (step Sc6). Here, assume that the transmission line design unit 42a determines that the specified transmission distance of the transmission mode A satisfies the transmission distance to the ground. In this case, the transmission line design unit 42a generates transmission mode information including the selected configuration information and connection source address information included in the connection request data. Thereafter, the transmission line design unit 42a notifies the connection node devices 1X and 1Y of the generated transmission mode information (step Sc7). For example, the transmission line design unit 42a notifies the connection node device 1X of the generated transmission mode information via the connection line 3X, and notifies the connection node device 1Y of the generated transmission mode information via the connection line 3Y.

The control unit 12X of the connection node device 1X receives the transmission mode information transmitted by the transmission line design unit 42a of the operation device 4a. The control unit 12X outputs the received transmission mode information to the connection information processing unit 13X. The connection information processing unit 13X generates an optical signal including the transmission mode information output from the control unit 12X. The connection information processing unit 13X outputs the generated optical signal to an output switching unit 11X via an optical fiber 92XR. The output switching unit 11X transmits the optical signal output from the connection information processing unit 13X to the optical fiber 51R via an optical fiber 91XR and a wavelength multiplexing unit 112X. In this manner, the connection node device 1X notifies the optical communication device 2X of the transmission mode information (step Sc8). The optical signal transmitted from the output switching unit 11X propagates through the optical fiber 51R and is input to the optical communication device 2X.

The control unit 12Y of the connection node device 1Y receives the transmission mode information transmitted by the transmission line design unit 42a of the operation device 4a. The control unit 12Y outputs the received transmission mode information to the connection information processing unit 13Y. The connection information processing unit 13Y generates an optical signal including the transmission mode information output from the control unit 12X. The connection information processing unit 13Y outputs the generated optical signal to an output switching unit 11Y via an optical fiber 92YR. The output switching unit 11Y transmits the optical signal output from the connection information processing unit 13Y to the optical fiber 53R via an optical fiber 91YR and a wavelength multiplexing unit 112Y. In this manner, the connection node device 1Y notifies the optical communication device 2aY of the transmission mode information (step Sc9). The optical signal transmitted from the output switching unit 11Y propagates through the optical fiber 53R and is input to the optical communication device 2aY.

The optical communication device 2X receives the optical signal propagated through the optical fiber 51R. The main signal transmitting/receiving unit 21X of the optical communication device 2X converts the received optical signal into an electrical signal to obtain a received data signal. The main signal transmitting/receiving unit 21X reads the transmission mode information from the overhead area of the received data signal. In a case where the connection source address information included in the read transmission mode information is not the address information given to the main signal transmitting/receiving unit 21X stored in the internal storage area, the main signal transmitting/receiving unit 21X discards the captured transmission mode information. On the other hand, in a case where the address information included in the captured transmission mode information matches the address information given to the main signal transmitting/receiving unit 21X, the main signal transmitting/receiving unit 21X sets the transmission mode indicated in the read transmission mode information (step Sc10).

The optical communication device 2aY receives the optical signal propagated through the optical fiber 53R. The main signal transmitting/receiving unit 21Y of the optical communication device 2aY converts the received optical signal into an electrical signal to obtain a received data signal. The main signal transmitting/receiving unit 21Y reads the transmission mode information from the overhead area of the received data signal. In a case where the connection source address information included in the read transmission mode information is not the address information given to the main signal transmitting/receiving unit 21Y stored in the internal storage area, the main signal transmitting/receiving unit 21Y discards the captured transmission mode information. On the other hand, in a case where the address information included in the captured transmission mode information matches the address information given to the main signal transmitting/receiving unit 21Y, the main signal transmitting/receiving unit 21Y sets the transmission mode indicated in the read transmission mode information (step Sc11).

After the notification of the transmission mode information, the control unit 12X of the connection node device 1X refers to the path information table and detects identification information for specifying the optical transmission line 51 corresponding to the connection source address information included in the transmission mode information. Here, the control unit 12X detects identification information for specifying the optical transmission line 51 corresponding to the address information of the main signal transmitting/receiving unit 21X. The control unit 12X performs switching processing of connecting the optical transmission line 51 and the optical transmission line 52 on the basis of the detected identification information for specifying the optical transmission line 51 and identification information for specifying the optical transmission line 52. The control unit 12X outputs, to the output port switching unit 113X of the output switching unit 11X, a switching instruction signal for setting the connection destination of the optical fiber 51T to the optical fiber 52T and a switching instruction signal for setting the connection destination of the optical fiber 51R to the optical fiber 52R.

Upon receiving the switching instruction signals from the control unit 12X, the output port switching unit 113X connects the optical fiber 51T and the optical fiber 52T and connects the optical fiber 51R and the optical fiber 52R (step Sc12). As a result, the optical fiber 51T and the optical fiber 52T are connected via the output switching unit 11X, and the optical fiber 51R and the optical fiber 52R are connected via the output switching unit 11X.

After the notification of the transmission mode information, the control unit 12Y of the connection node device 1Y refers to the path information table and detects identification information for specifying the optical transmission line 51 corresponding to the connection source address information included in the transmission mode information. Here, the control unit 12Y detects identification information for specifying the optical transmission line 53 corresponding to the address information of the main signal transmitting/receiving unit 21Y. The control unit 12Y performs switching processing of connecting the optical transmission line 53 and the optical transmission line 52 on the basis of the detected identification information for specifying the optical transmission line 53 and identification information for specifying the optical transmission line 52. The control unit 12Y outputs to the output port switching unit 113Y of the output switching unit 11Y, a switching instruction signal for setting the connection destination of the optical fiber 53T to the optical fiber 52R and a switching instruction signal for setting the connection destination of the optical fiber 53R to the optical fiber 52T.

Upon receiving the switching instruction signals from the control unit 12Y, the output port switching unit 113Y connects the optical fiber 53T and the optical fiber 52R and connects the optical fiber 53R and the optical fiber 52T (step Sc13). More specifically, the output port switching unit 113Y connects the optical fiber 53T and the optical fiber 52R by switching the path so as to connect the optical fiber 52R and the optical fiber 91YT, and connects the optical fiber 53R and the optical fiber 52T by switching the path so as to connect the optical fiber 52T and the optical fiber 91YR. As a result, the optical fiber 53T and the optical fiber 52R are connected via the output switching unit 11Y, and the optical fiber 53R and the optical fiber 52T are connected via the output switching unit 11Y. Through the processing of steps Sc12 and Sc13, the main signal transmitting/receiving unit 21X of the optical communication device 2X and the main signal transmitting/receiving unit 21Y of the optical communication device 2aY are connected via the optical transmission line 51, the optical transmission line 52, and the optical transmission line 53.

### (Processing by Optical Transmission System of Second Embodiment)

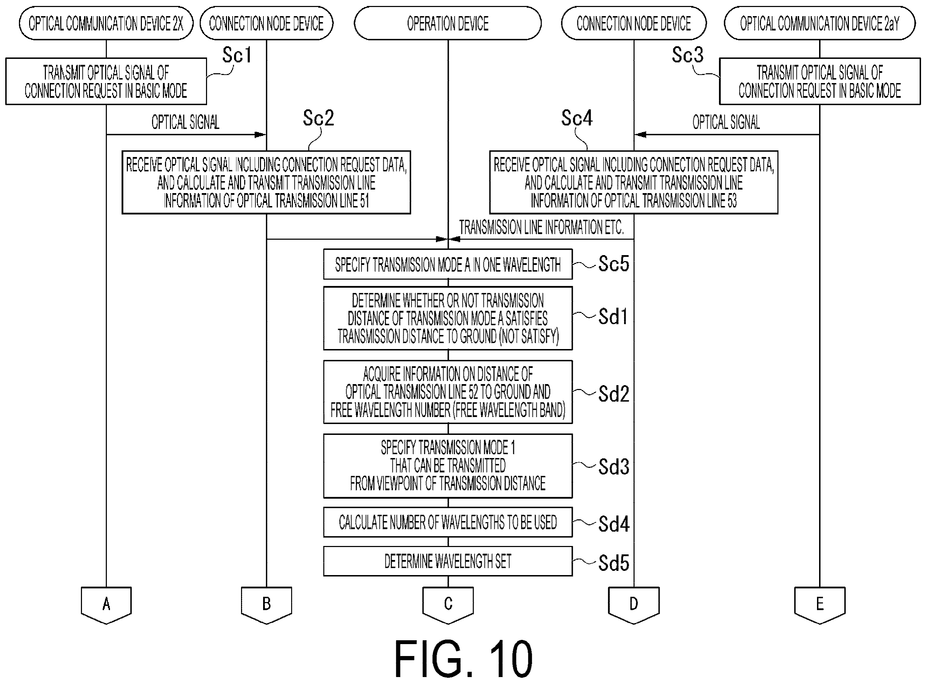

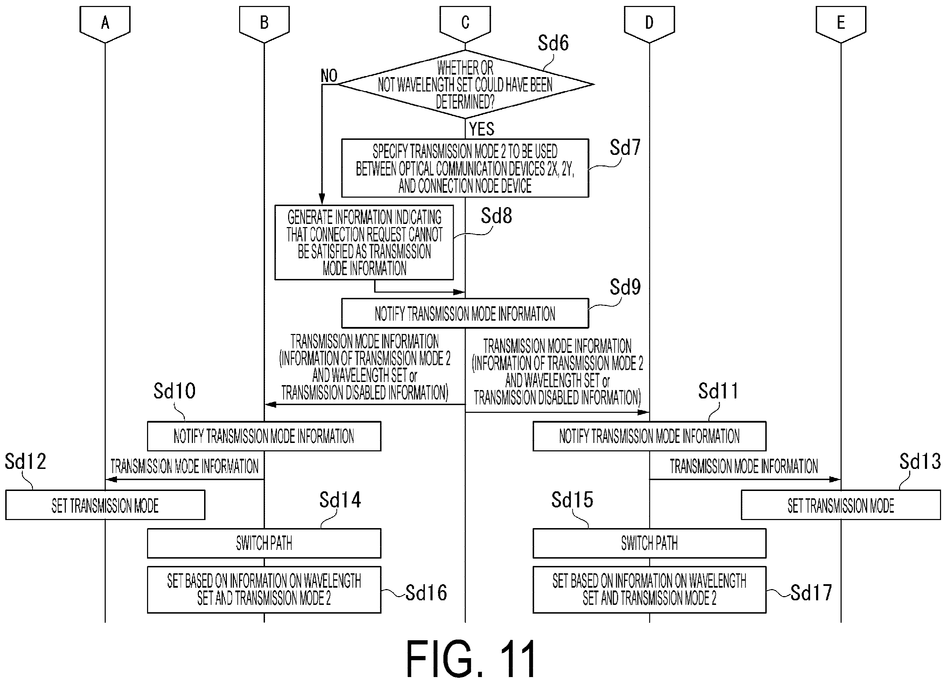

Figs. 10 and 11 are sequence diagrams illustrating a flow of processing (part 2) performed by the optical transmission system 100a according to the second embodiment. Note that, in Figs. 10 and 11, processing in a case where the specified transmission mode does not satisfy a request will be described. In Figs. 10 and 11, the processing steps similar to those in Fig. 9 is denoted by the reference signs similar to those used in Fig. 9, and explanation thereof is omitted.

After the processing of step Sc5, the transmission line design unit 42a determines whether or not the specified transmission distance of the transmission mode A satisfies the transmission distance to the ground on the basis of the transmission line information of the optical transmission line 51, the transmission line information of the optical transmission line 52, and the transmission line information of the optical transmission line 53 (step Sd1). Here, assume that the transmission line design unit 42a determines that the specified transmission distance of the transmission mode A does not satisfy the transmission distance to the ground. In this case, the transmission line design unit 42a acquires information on the distance of the optical transmission line 52 and the free wavelength number (free wavelength band) (step Sd2).

The transmission line design unit 42a may acquire the information of the free wavelength number (free wavelength band) from the information indicating the free resource of the optical transmission line 52 stored in the internal storage area. Assume that the information on the distance of the optical transmission line 52 is acquired in advance by the transmission line design unit 42a and stored in an internal storage area, or acquired from an external device on demand.

On the basis of the distance of the optical transmission line 52, the transmission line information of the optical transmission line 51, the transmission line information of the optical transmission line 52, and the transmission line information of the optical transmission line 53, the transmission line design unit 42a specifies the transmission mode that can be transmitted from the viewpoint of the transmission distance (step Sd3). Here, the transmission mode that can be transmitted from the viewpoint of the transmission distance is a transmission mode that satisfies the transmission distance from the optical communication device 2X to the ground (for example, the optical communication device 2aY) and is a transmission mode that satisfies the transmission distance from the optical communication device 2aY to the ground (for example, the optical communication device 2X). In a case where there is a plurality of transmission modes that can be transmitted from the viewpoint of the transmission distance, the transmission line design unit 42a may make an inquiry to the resource management system of the network. In the processing of step Sd3, assume that the transmission line design unit 42a specifies the transmission mode 1.

The transmission line design unit 42a calculates the number of wavelengths to be used on the basis of the bit rate of the specified transmission mode 1 and the desired bit rate included in the connection request data (step Sd4). Specifically, the transmission line design unit 42a calculates the number of wavelengths so that the bit rate of the transmission mode 1 can satisfy the desired bit rate. Thereafter, the transmission line design unit 42a determines the wavelength set to be used with reference to the information indicating the free resource (step Sd5).

The transmission line design unit 42a determines whether or not the wavelength set could have been determined (step Sd6). If it is determined that the wavelength set could have been determined (step Sd6-YES), the transmission line design unit 42a specifies the transmission mode to be used between the optical communication device 2X and the connection node device 1X and the transmission mode to be used between the optical communication device 2Y and the connection node device 1Y (step Sd7). In the processing of step Sd7, assume that the transmission line design unit 42a specifies a transmission mode 2.

On the other hand, if it is determined that the wavelength set could not have been determined (step Sd6-NO), the transmission line design unit 42a generates the transmission mode information including the transmission disabled information and the connection source address information included in the connection request data (step Sd8). Thereafter, the transmission line design unit 42a notifies the connection node devices 1X and 1Y of the generated transmission mode information (step Sd9). For example, the transmission line design unit 42a notifies the connection node device 1X of the generated transmission mode information via the connection line 3X, and notifies the connection node device 1Y of the generated transmission mode information via the connection line 3Y.

In a case where the wavelength set could have been determined, the transmission line design unit 42a generates transmission mode information addressed to the optical communication device 2X and transmission mode information addressed to the optical communication device 2Y. Specifically, the transmission line design unit 42a generates, as the transmission mode information addressed to the optical communication device 2X, transmission mode information including information (for example, information specifying the transmission mode 2) specifying the transmission mode used by the optical communication device 2X, information on wavelength set, and connection source address information included in the connection request data. Furthermore, the transmission line design unit 42a generates, as the transmission mode information addressed to the optical communication device 2Y, transmission mode information including information (for example, information specifying the transmission mode 2) for specifying the transmission mode used by the optical communication device 2Y and the information on wavelength set.

The control unit 12X of the connection node device 1X receives the transmission mode information transmitted by the transmission line design unit 42a of the operation device 4a. In a case where the received transmission mode information includes the information on wavelength set, the control unit 12X outputs the information on wavelength set and the information for specifying the transmission mode (for example, information specifying the transmission mode 2) to a multiple-lane processing unit 15X. Then, the control unit 12X outputs the transmission mode information excluding the information on wavelength set to the connection information processing unit 13X. The connection information processing unit 13X generates an optical signal including the transmission mode information output from the control unit 12X.

The connection information processing unit 13X outputs the generated optical signal to an output switching unit 11X via an optical fiber 92XR. The output switching unit 11X transmits the optical signal output from the connection information processing unit 13X to the optical fiber 51R via an optical fiber 91XR and a wavelength multiplexing unit 112X. In this manner, the connection node device 1X notifies the optical communication device 2X of the transmission mode information (step Sd 10). The optical signal transmitted from the output switching unit 11X propagates through the optical fiber 51R and is input to the optical communication device 2X.

The control unit 12Y of the connection node device 1Y receives the transmission mode information transmitted by the transmission line design unit 42a of the operation device 4a. In a case where the received transmission mode information includes the information on wavelength set, the control unit 12Y outputs the information on wavelength set and the information for specifying the transmission mode (for example, information specifying the transmission mode 2) to a multiple-lane processing unit 15Y. Then, the control unit 12Y outputs the transmission mode information excluding the information on wavelength set to the connection information processing unit 13Y. The connection information processing unit 13Y generates an optical signal including the transmission mode information output from the control unit 12Y.

The connection information processing unit 13Y outputs the generated optical signal to an output switching unit 11Y via an optical fiber 92YR. The output switching unit 11Y transmits the optical signal output from the connection information processing unit 13Y to the optical fiber 53R via an optical fiber 91YR and a wavelength multiplexing unit 112Y. In this manner, the connection node device 1Y notifies the optical communication device 2Y of the transmission mode information (step Sd11). The optical signal transmitted from the output switching unit 11Y propagates through the optical fiber 51R and is input to the optical communication device 2Y.

The optical communication device 2X receives the optical signal propagated through the optical fiber 51R. The main signal transmitting/receiving unit 21X of the optical communication device 2X converts the received optical signal into an electrical signal to obtain a received data signal. The main signal transmitting/receiving unit 21X reads the transmission mode information from the overhead area of the received data signal. In a case where the connection source address information included in the read transmission mode information is not the address information given to the main signal transmitting/receiving unit 21X stored in the internal storage area, the main signal transmitting/receiving unit 21X discards the captured transmission mode information. On the other hand, in a case where the address information included in the captured transmission mode information matches the address information given to the main signal transmitting/receiving unit 21X, the main signal transmitting/receiving unit 21X sets the transmission mode (for example, transmission mode 2) indicated in the read transmission mode information (step Sd12).

The optical communication device 2Y receives the optical signal propagated through the optical fiber 53R. The main signal transmitting/receiving unit 21Y of the optical communication device 2Y converts the received optical signal into an electrical signal to obtain a received data signal. The main signal transmitting/receiving unit 21Y reads the transmission mode information from the overhead area of the received data signal. In a case where the connection source address information included in the read transmission mode information is not the address information given to the main signal transmitting/receiving unit 21Y stored in the internal storage area, the main signal transmitting/receiving unit 21Y discards the captured transmission mode information. On the other hand, in a case where the address information included in the captured transmission mode information matches the address information given to the main signal transmitting/receiving unit 21Y, the main signal transmitting/receiving unit 21Y sets the transmission mode (for example, transmission mode 2) indicated in the read transmission mode information (step Sd13).

After the notification of the transmission mode information, the control unit 12X of the connection node device 1X outputs, to the output port switching unit 113X, a switching instruction signal for causing the output port switching unit 113X to perform the second switching processing. Upon receiving the switching instruction signal from the control unit 12X, the output port switching unit 113X performs the second switching processing (step Sd14). As a result, the optical fiber 91XT and an optical fiber 93XT are connected via the output switching unit 11X, the optical fiber 91XR and an optical fiber 93XR are connected via the output switching unit 11X, an optical fiber 94XT and the optical fiber 52T are connected via the output switching unit 11X, and an optical fiber 94XR and the optical fiber 52R are connected via the output switching unit 11X.

After the notification of the transmission mode information, the control unit 12Y of the connection node device 1Y outputs, to the output port switching unit 113Y, a switching instruction signal for causing the output port switching unit 113Y to perform the second switching processing. Upon receiving the switching instruction signal from the control unit 12Y, the output port switching unit 113Y performs the second switching processing (step Sd15). As a result, the optical fiber 91YT and an optical fiber 93YT are connected via the output switching unit 11Y, the optical fiber 91YR and an optical fiber 93YR are connected via the output switching unit 11Y, an optical fiber 94YT and the optical fiber 52R are connected via the output switching unit 11Y, and an optical fiber 94YR and the optical fiber 52T are connected via the output switching unit 11Y.

The multiple-lane processing unit 15X performs setting based on the information for specifying the transmission mode included in the transmission mode information and the information on wavelength set (step Sd16). Specifically, a division synthesis unit 151X of the multiple-lane processing unit 15X determines the number of divisions on the basis of the information on wavelength set. For example, the division synthesis unit 151X determines the number of wavelengths as the number of divisions. Furthermore, TP function units 152X-1 to 152X-m specifies the wavelength to be used on the basis of the information on wavelength set, and specifies the modulation scheme or the like on the basis of the information for specifying the transmission mode.

The multiple-lane processing unit 15Y performs setting based on the information for specifying the transmission mode included in the transmission mode information and the information on wavelength set (step Sd17). Specifically, a division synthesis unit 151Y of the multiple-lane processing unit 15Y determines the number of divisions on the basis of the information on wavelength set. For example, the division synthesis unit 151Y determines the number of wavelengths as the number of divisions. Furthermore, TP function units 152Y-1 to 152Y-m specifies the wavelength to be used on the basis of the information on wavelength set, and specifies the modulation scheme or the like on the basis of the information for specifying the transmission mode.

Through the above switching processing, the main signal transmitting/receiving unit 21X of the optical communication device 2X and the main signal transmitting/receiving unit 21Y of the optical communication device 2aY are connected via the multiple-lane processing unit 15X, the wavelength multiplexing/demultiplexing unit 16, the multiple-lane processing unit 15Y, and a wavelength multiplexing/demultiplexing unit 16Y.

According to the optical transmission system 100a in the second embodiment configured as described above, it is possible to obtain an effect similar to that of the first embodiment even when setting an optical path between the optical communication devices 2X and 2Y located outside the carrier network.

### (Third Embodiment)

In the third embodiment, a configuration in a case where a transmission capacity that satisfies a desired transmission distance cannot be secured even if multiple-lane processing is performed in a carrier network will be described. Here, the multiple-lane processing means processing of transmitting data using a plurality of wavelengths.

A system configuration in the third embodiment is similar to that in the first embodiment. Since the processing of the operation device 4 is different from that of the first embodiment, the following difference will be mainly described.

In a case where a transmission capacity that satisfies a desired transmission distance cannot be secured even if the multiple-lane processing is performed, the transmission line design unit 42 of the operation device 4 according to the third embodiment calculates a transmission mode that satisfy the transmission distance and the number of wavelengths on the basis of transmission line information to the ground, and then calculates a communicable transmission capacity (for example, a transmission capacity A) on the basis of the transmission mode and the number of wavelengths. Here, the case where the transmission capacity that satisfies the desired transmission distance cannot be secured even if the multiple-lane processing is performed includes a case where the distance to the ground is too long, a case where the size of the transmission data is too large, and the like.

Then, in the transmission mode setting to the optical communication device 2X, the transmission line design unit 42 determines a transmission mode satisfying a transmission capacity (for example, the transmission capacity A) with a transmission capacity smaller than the transmission capacity requested by the connection request data. As described above, the transmission line design unit 42 according to the third embodiment determines a transmission mode that can be transmitted with a transmission capacity close to the transmission capacity requested by the connection request data even when the transmission mode that satisfies the transmission capacity requested by the connection request data cannot be selected.

In the optical transmission system 100 according to the third embodiment configured as described above, when the transmission capacity satisfying the desired transmission distance cannot be secured, the transmission line design unit 42 of the operation device 4 newly determines a transmission mode close to the request of the connection request data. In this manner, the operation device 4 determines the transmission mode so that the optical communication device 2X and the optical communication device 2Y can communicate using the transmission mode that is as close as possible to the request of the connection request data. Therefore, communication can be executed between the optical communication device 2X and the optical communication device 2Y.

### (Fourth Embodiment)

In the fourth embodiment, a configuration for performing a multiple-lane processing in an optical communication device located outside a carrier network will be described.

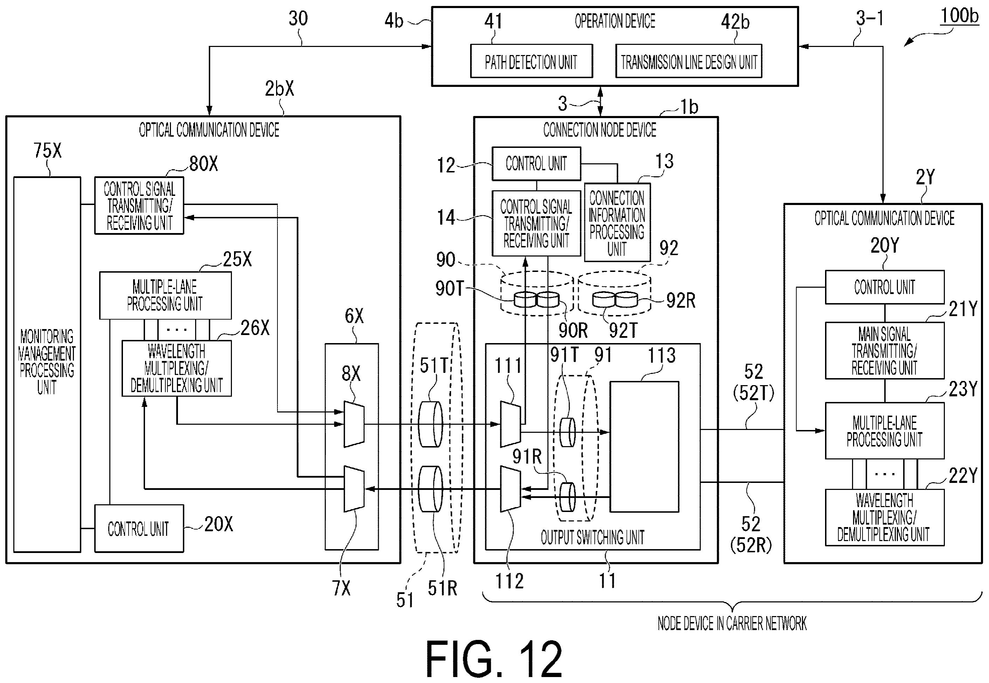

Fig. 12 is a block diagram illustrating a configuration of an optical transmission system 100b according to the fourth embodiment. The optical transmission system 100b includes a connection node device 1b, an optical communication device 2bX, the optical communication device 2Y, and an operation device 4b. The number of the connection node device 1b, the optical communication device 2bX, and the optical communication device 2Y is not particularly limited, but in Fig. 12, a case where the number of the connection node device 1b, the optical communication device 2bX, and the optical communication device 2Y is one will be described as an example.

The connection node device 1b and the optical communication device 2Y illustrated in Fig. 12 are node devices provided in a carrier network. The optical communication device 2bX is, for example, a communication device used by a user.

The connection node device 1b and the optical communication device 2bX are connected via the optical transmission line 51, and the connection node device 1b and the optical communication device 2Y are connected via the optical transmission line 52. The operation device 4b is connected to the connection node device 1b via the connection line 3, is connected to the optical communication device 2Y via the connection line 3-1, and is connected to the optical communication device 2bX via a connection line 30.

The connection node device 1b includes the output switching unit 11, the control unit 12, the connection information processing unit 13, the control signal transmitting/receiving unit 14, the control signal internal optical line 90, and the connection processing internal optical line 92. As described above, the connection node device 1b is different from the connection node device 1 in that the connection node device 1b does not include the multiple-lane processing unit 15, the wavelength multiplexing/demultiplexing unit 16, the main signal internal optical line 93, and the multiplexing/demultiplexing internal optical line 94. That is, in the fourth embodiment, the connection node device 1b does not perform the multiple-lane processing.

The operation device 4b includes the path detection unit 41 and a transmission line design unit 42b. The transmission line design unit 42b performs basically the same processing as that of the transmission line design unit 42 in the first embodiment. The transmission line design unit 42b transmits the transmission mode information to the connection node device 1b without including the information on wavelength set in the transmission mode information. The transmission line design unit 42b transmits the information on wavelength set to the optical communication device 2bX via the connection line 30.

The optical communication device 2bX includes the control signal multiplexing/separating unit 6X, the control unit 20X, the monitoring management processing unit 75X, the control signal transmitting/receiving unit 80X, a multiple-lane processing unit 25X, and a wavelength multiplexing/demultiplexing unit 26X. The multiple-lane processing unit 25X and the wavelength multiplexing/demultiplexing unit 26X perform processing similar to those of the multiple-lane processing unit 15 and the wavelength multiplexing/demultiplexing unit 16 in the first embodiment. Similarly to the multiple-lane processing unit 15, the multiple-lane processing unit 25 includes the division synthesis unit 151 and a plurality of TP function units 152-1 to 152-m. Here, the plurality of TP function units 152-1 to 152-m also have the function of the main signal transmitting/receiving unit 21X.

The control unit 20X performs setting for the multiple-lane processing unit 25X on the basis of the information on wavelength set transmitted from the operation device 4b. For example, the control unit 20X sets the number of divisions by the division synthesis unit 151 according to the number of wavelengths included in the information on wavelength set. Furthermore, the control unit 20X sets the wavelength of the optical signal generated by the TP function units 152-1 to 152-m according to the wavelength number included in the information on wavelength set. Furthermore, the control unit 20X sets, to the TP function units 152-1 to 152-m, the transmission mode designated by the transmission mode information notified from the connection node device 1b.

Here, processing of the optical communication device 2bX will be described. Assume that the optical communication device 2bX requests transmission of a client signal of 800G in the connection request data. Then, assume that the optical communication device 2bX receives the number of wavelengths "4" and the wavelength number "λ1, λ2, λ3, λ4" to be used as the information on wavelength set from the operation device 4b. Furthermore, assume that the optical communication device 2bX receives information for specifying the transmission mode A as the transmission mode information from the operation device 4b. The control unit 20X performs setting based on each piece of received information on the multiple-lane processing unit 25X.

The control unit 20X of the optical communication device 2bX captures transmission data of 800G from the connected external device. The control unit 20X outputs the captured transmission data of 800G to the multiple-lane processing unit 25X. The division synthesis unit 151 of the multiple-lane processing unit 25X divides the input transmission data of 800G into the set number of divisions. For example, the division synthesis unit 151 divides the transmission data of 800G into four pieces of transmission data. Each of the four pieces of transmission data is transmission data of 200G.

The division synthesis unit 151 outputs each of the four pieces of divided transmission data to the TP function units 152-1 to 152-m that outputs the wavelength of the designated wavelength number. For example, the division synthesis unit 151 outputs one piece of transmission data to the TP function unit 152-1 that outputs the light of the wavelength λ1, outputs one piece of transmission data to the TP function unit 152-2 that outputs the light of the wavelength λ2, outputs one piece of transmission data to the TP function unit 152-3 that outputs the light of the wavelength λ3, and outputs one piece of transmission data to the TP function unit 152-4 that outputs the light of the wavelength λ4.

The TP function units 152-1 to 152-4 generate transmission data signals in a transmission frame format including the input transmission data in a payload. The TP function units 152-1 to 152-4 optically modulate the continuous light on the basis of the generated transmission data signals to generate optical signals having wavelengths λ1 to λ4. The TP function units 152-1 to 152-4 output the generated optical signals having the wavelengths λ1 to λ4 to the wavelength multiplexing/demultiplexing unit 26X. The wavelength multiplexing/demultiplexing unit 26X multiplexes the optical signals having the wavelengths λ1 to λ4 output from the TP function units 152-1 to 152-4 to generate a multiplex signal. The wavelength multiplexing/demultiplexing unit 26X transmits the generated multiplex signal to the optical transmission line 51 via the wavelength multiplexing unit 8X. As a result, the multiplex signal transmitted from the optical communication device 2bX is transmitted to the optical communication device 2Y via the connection node device 1b.

According to the optical transmission system 100b configured as described above, the transmission mode can be set to satisfy the request of the user by dividing the large-capacity transmission data and using the plurality of wavelengths in the optical communication device 2bX. Therefore, it is possible to set a transmission mode satisfying a desired connection request at the time of setting an End-to-End optical path including a transponder located outside a carrier network.

Furthermore, in the optical transmission system 100b, it is possible to perform communication from the optical communication device 2bX to the optical communication device 2Y as an optical signal without performing photoelectric conversion as compared with the above-described embodiments. As a result, processing delay due to photoelectric conversion can be eliminated.

### (Modifications 1 in First to Fourth Embodiments)

In each of the above-described embodiments, the configuration has been described in which the main signal transmitting/receiving unit 21X transmits the connection request data in the basic mode. However, in the optical communication device 2X, the control signal transmitting/receiving unit 80X may be configured to transmit a control signal including the connection request data in the basic mode. In such a configuration, the control unit 20X outputs the connection request instruction signal to the monitoring management processing unit 75X, and the monitoring management processing unit 75X outputs the connection request instruction signal to the control signal transmitting/receiving unit 80X. Upon receiving the connection request instruction signal from the control unit 20X, the control signal transmitting/receiving unit 80X generates connection request data similarly to the main signal transmitting/receiving unit 21X. At this time, the information included in the connection request data is the same as the information included in the connection request data generated by the main signal transmitting/receiving unit 21X.

In such a configuration, the control signal including the connection request data transmitted from the control signal transmitting/receiving unit 80X is separated by the wavelength separating unit 111 of the output switching unit 11. As a result, the control signal including the connection request data transmitted from the optical communication device 2X is transferred to the operation device 4 via the control signal transmitting/receiving unit 14 and the control unit 12.

Note that, similarly in the optical communication device 2aY in the second embodiment, the control signal transmitting/receiving unit 80Y may be configured to transmit the control signal including the connection request data in the basic mode.

### (Modifications 2 in First to Fourth Embodiments)

In a case where the communication of the basic mode is used in the optical communication device 2X, the transmission mode or the communication start may be separately set to the optical communication device 2X using a control signal from the connection node devices 1 and 1X. Furthermore, assume that the connection request data may be exchanged by a control signal. The connection node devices 1 and 1X may acquire the transmission line information of the optical transmission line 51 using an OSNR measuring device disposed therein.

In the second embodiment, in a case where the communication of the basic mode is used in the optical communication device 2aY, the transmission mode or the communication start may be separately set to the optical communication device 2aY using a control signal from the connection node device 1Y. Furthermore, assume that the connection request data may be exchanged by a control signal. The connection node devices 1Y may acquire the transmission line information of the optical transmission line 53 using the OSNR measuring device disposed therein.

### (Modifications 3 in First to Fourth Embodiments)

The wavelength (wavelength of the control signal) of the control signal transmitting/receiving unit 80X of the optical communication device 2X may be amplified by an optical amplifier as a wavelength close to the wavelength of the main signal. At this time, when there is a concern about an influence on the main signal, the wavelength of the main signal and the wavelength band of the control signal may be changed. For example, the band may be changed such that the main signal is in C band and the control signal is in O band.

### (Modifications 4 in First to Fourth Embodiments)

When determining the transmission mode and the wavelength set, the transmission line design units 42 and 42a may select a setting of minimizing the frequency band to be used, or may select a setting of having a large margin, that is, a setting of obtaining the OSNR larger than the OSNR that can be transmitted.

### (Modifications 5 in First to Fourth Embodiments)

In each of the above-described embodiments, the configuration has been described in which the transmission line design units 42 and 42a included in the operation devices 4 and 4a perform processing such as calculation of the number of wavelengths in addition to optimization of the transmission modes of the optical communication devices 2X and 2Y. However, the connection node devices 1, 1X, and 1Y may have functions of performing processing such as optimization of the transmission modes of the optical communication devices 2X and 2Y and calculation of the number of wavelengths. In this case, the connection node devices 1 and 1X may calculate the transmission line information of the optical transmission line 52 in advance by predetermined calculation on the basis of the optical signal transmitted through the optical transmission line 52 constituting the carrier network and store the transmission line information in the internal storage area, or may acquire the transmission line information from the external device or the operation device 4 on demand at a specific timing such as when the network is laid.

In the case of the above configuration, in the first embodiment, the connection node device 1 includes a transmission line design unit having a function of the transmission line design unit 42 that performs the processing from step Sa3 to step Sa5. Furthermore, in the first embodiment, the connection node device 1 includes a transmission line design unit having a function of processing performed by the transmission line design unit 42 in the processing from step Sb1 to step Sb9.

In the case of the above configuration, in the second embodiment, any one of the connection node devices 1X and 1Y includes a transmission line design unit having a function of the transmission line design unit 42a that performs the processing from step Sc5 to step Sc7. Furthermore, in the second embodiment, any one of the connection node devices 1X and 1Y includes a transmission line design unit having a function of the transmission line design unit 42a that performs the processing from step Sd1 to step Sd9.

### (Modifications 6 in First to Fourth Embodiments)

In each of the above-described embodiments, the configuration has been described in which the connection node devices 1, 1X, and 1Y and the optical communication device 2bX perform processing performed by the multiple-lane processing unit and the wavelength multiplexing/demultiplexing unit. However, the place where the processing performed by the multiple-lane processing unit and the wavelength multiplexing/demultiplexing unit is performed is not limited to the above. For example, the place where the processing is performed by the multiple-lane processing unit and the wavelength multiplexing/demultiplexing unit may be any place as long as it is in the middle of the transmission line to the ground.

The control units 12X, 20X, 12Y, and 20Y and the operation devices 4 and 4a in the above-described embodiments may be realized by a computer. In that case, a program for implementing this function may be recorded in a computer-readable recording medium, and the program recorded in the recording medium may be read and executed by a computer system to implement this function. Note that, "computer system" herein includes hardware such as an operating system (OS) and peripheral devices. Furthermore, the "computer-readable recording medium" refers to a portable medium such as a flexible disk, a magneto-optical disk, a read only memory (ROM), or a CD-ROM, or a storage device such as a hard disk included in the computer system. Furthermore, the "computer-readable recording medium" may include a medium that dynamically holds the program for a short time, such as a communication line in a case where the program is transmitted via a network such as the Internet or a communication line such as a telephone line, and a medium that holds the program for a certain period of time, such as a volatile memory inside the computer system serving as a server or a client in that case. The program described above may be for implementing some of the functions described above, may be implemented in a combination of the functions described above and a program already recorded in a computer system, or may be implemented with a programmable logic device such as a field programmable gate array (FPGA).

Although the embodiments of the present invention have been described in detail with reference to the drawings, specific configurations are not limited to the embodiments, and include design and the like within the scope of the present invention without departing from the gist of the present invention.

### Industrial Applicability

This can be used when an optical path passing through a plurality of optical transmission lines is set.

### Reference Signs List

1, 1b, 1X, 1Y Connection node device
2X, 2Y, 2aY, 2bX Optical communication device
3, 3X, 3Y, 3-1, 30 Connection line
4, 4a, 4b Operation device
6X, 6Y Control signal multiplexing/separating unit
7X, 7Y, 111, 111X, 111Y Wavelength separating unit
8X, 8Y, 112, 112X, 112Y Wavelength multiplexing unit
11 Output switching unit
12, 12X, 12Y, 20X, 20Y Control unit
13, 13X, 13Y Connection information processing unit
14, 14X, 14Y, 80X, 80Y Control signal transmitting/receiving unit
15, 15X, 15Y, 23Y, 25X Multiple-lane processing unit
16, 16X, 16Y, 22Y, 26X Wavelength multiplexing/demultiplexing unit
21X, 21YMain signal transmitting/receiving unit
41 Path detection unit
42, 42a Transmission line design unit
51T, 51R, 52T, 52R, 53T, 53R, 90T, 90R, 90XT, 90XR, 90YT, 90YR, 91T, 91R, 91XT, 91XR, 91YT, 91YR, 92T, 92R, 92XT, 92XR, 92YT, 92YR, 93T, 93R, 93XT, 93XR, 93YT, 93YR, 94T, 94R, 94XT, 94XR, 94YT, 94YR Optical fiber
75X, 75YMonitoring management processing unit
90 Control signal internal optical line
91 Main signal internal optical line
92 Connection processing internal optical line
100, 100a, 100b Optical transmission system
113, 113X, 113Y Output port switching unit
151 Division synthesis unit
152, 152-1 to 152-m TP function unit

## Claims

1. An optical transmission system comprising: one or more node devices provided in a carrier network; a control device configured to control the one or more node devices; a user-side optical communication device provided outside the carrier network; a first optical transmission line configured to connect the user-side optical communication device and at least one node device of the one or more node devices; and a second optical transmission line configured to connect node devices, the optical transmission system comprising:
a transmission line design unit configured to specify a first transmission mode to be used for communication of the user-side optical communication device in response to a request of connection request data, acquire information regarding a plurality of wavelengths to be used for communication of the user-side optical communication device in a case where the specified first transmission mode does not satisfy the request of connection request data, and notify the acquired information regarding the plurality of wavelengths;
a multiple-lane processing unit configured to generate optical signals of a plurality of wavelengths using an optical signal transmitted from the user-side optical communication device or a transmission signal input to the user-side optical communication device on a basis of the information regarding the plurality of wavelengths notified by the transmission line design unit; and
a wavelength demultiplexing unit configured to generate a multiplex signal by multiplexing optical signals of a plurality of wavelengths generated by the multiple-lane processing unit and transmit the generated multiplex signal to a communication partner of the user-side optical communication device.

2. The optical transmission system according to claim 1, wherein
the information regarding the plurality of wavelengths includes information on the number of wavelengths to be used and information on a wavelength number designating a wavelength, and
the multiple-lane processing unit includes:
a division synthesis unit configured to generate a plurality of pieces of divided data after converting an optical signal transmitted from the user-side optical communication device into an electrical signal or by dividing a transmission signal input to the user-side optical communication device according to information on the number of wavelengths included in the information regarding the plurality of wavelengths; and
a transponder function unit configured to generate, for each of the plurality of pieces of divided data, optical signals of a plurality of wavelengths designated by information of the wavelength number included in the information regarding the plurality of wavelengths.

3. The optical transmission system according to claim 1 or 2, wherein
in a case where the multiple-lane processing unit and the wavelength demultiplexing unit are included in the one or more node devices,
the multiple-lane processing unit generates optical signals of a plurality of wavelengths using an optical signal transmitted from the user-side optical communication device.

4. The optical transmission system according to claim 1 or 2, wherein
in a case where the multiple-lane processing unit and the wavelength demultiplexing unit are included in the user-side optical communication device,
the multiple-lane processing unit generates optical signals of a plurality of wavelengths using a transmission signal input to the user-side optical communication device.

5. The optical transmission system according to claim 1 or 2, wherein
the transmission line design unit:
when a request of the connection request data is not able to be satisfied even in a case where information regarding a plurality of wavelengths used for communication of the user-side optical communication device is acquired, calculates a transmission mode and the number of wavelengths that satisfy a transmission distance on a basis of transmission line information to a counter device, and then calculates a communicable transmission capacity on a basis of the transmission mode and the number of wavelengths, and newly specifies a transmission mode that satisfies the calculated transmission capacity.

6. The optical transmission system according to claim 1 or 2, further comprising:
a third optical transmission line that connects at least one node device of the one or more node devices to a counter device provided outside the carrier network that requests connection with the user-side optical communication device, wherein
the transmission line design unit:
specifies the first transmission mode to be used for communication between the user-side optical communication device and the counter device according to a request of connection request data transmitted from the counter device and a request of the connection request data transmitted from the user-side optical communication device, and when the specified first transmission mode does not satisfy each request of the connection request data, acquires information regarding a plurality of wavelengths to be used for communication of the user-side optical communication device, and notifies the acquired information regarding the plurality of wavelengths.

7. An optical transmission device in an optical transmission system comprising one or more node devices provided in a carrier network, a control device configured to control the one or more node devices, a user-side optical communication device provided outside the carrier network, a first optical transmission line configured to connect the user-side optical communication device and at least one node device of the one or more node devices, and a second optical transmission line configured to connect node devices, the optical transmission device comprising:
a multiple-lane processing unit configured to acquire, in response to a request of connection request data, information regarding a plurality of wavelengths to be used for communication of the user-side optical communication device, the information being calculated in a case where a first transmission mode to be used for communication of the user-side optical communication device does not satisfy the request of connection request data, and generate optical signals of a plurality of wavelengths by using an optical signal transmitted from the user-side optical communication device or a transmission signal input to the user-side optical communication device on a basis of the acquired information regarding the plurality of wavelengths; and
a wavelength demultiplexing unit configured to generate a multiplex signal by multiplexing optical signals of a plurality of wavelengths generated by the multiple-lane processing unit and transmit the generated multiplex signal to a communication partner of the user-side optical communication device.

8. A control method in an optical transmission system comprising one or more node devices provided in a carrier network, a control device configured to control the one or more node devices, a user-side optical communication device provided outside the carrier network, a first optical transmission line configured to connect the user-side optical communication device and at least one node device of the one or more node devices, and a second optical transmission line configured to connect node devices, an optical transmission method comprising:
specifying a first transmission mode to be used for communication of the user-side optical communication device in response to a request of connection request data, acquiring information regarding a plurality of wavelengths to be used for communication of the user-side optical communication device in a case where the specified first transmission mode does not satisfy the request of connection request data, and notifying the acquired information regarding the plurality of wavelengths;
generating optical signals of a plurality of wavelengths by using an optical signal transmitted from the user-side optical communication device or a transmission signal input to the user-side optical communication device on a basis of the notified information regarding the plurality of wavelengths; and
multiplexing the generated optical signals of the plurality of wavelengths to generate a multiplex signal, and transmitting the generated multiplex signal to a communication partner of the user-side optical communication device.
